# EUROPEAN PATENT APPLICATION

(11) **EP 4 503 493 A1**
(43) Date of publication of application: **05.02.2025**
(21) Application number: 23777865.9
(22) Date of filing: 16.03.2023
(51) Int. Cl.: H04L 5/00, H04W 72/04

(54) **METHOD AND APPARATUS FOR DETERMINING RELATIONSHIP BETWEEN PTRS PORTS AND DMRS PORTS, MEDIUM AND PRODUCT**

(30) Priority: 30.03.2022 WO PCT/CN2022/084107
(71) Applicant: Beijing Xiaomi Mobile Software Co., Ltd., Beijing 100085 (CN)
(72) Inventor: GAO, Xueyuan, Beijing 100085 (CN)
(74) Representative: Dehns Germany Partnerschaft mbB
(86) International application number: PCT/CN2023/081868
(87) International publication number: WO 2023/185490

(57) **Abstract**

The present disclosure discloses a method and apparatus for determining a relationship between PTRS ports and DMRS ports, a medium, and a product, relating to the field of communications. The method comprises: when a target layer mapping scheme corresponding to a number n of CWs is used, determining an association relationship between an uplink PTRS port and an uplink DMRS port on the basis of DCI, a maximum number of uplink DMRS ports being 8, a value of n being 1 or 2, and the target layer mapping scheme being a layer mapping scheme of type 1 or a layer mapping scheme of type 2. The method is used to support implementation of related functions of uplink PTRS ports and uplink DMRS ports corresponding to 8 antenna ports under different layer mapping schemes.

## Description

### CROSS-REFERENCE TO RELATED APPLICATION

This application claims priority to and benefits of an International application entitled "METHOD AND APPARATUS FOR DETERMINING RELATIONSHIP BETWEEN PTRS PORTS AND DMRS PORTS, MEDIUM AND PRODUCT" having an International Application number PCT/CN2022/084107 and filed on March 30, 2022, the entire content of which is incorporated herein by reference.

### TECHNICAL FIELD

The present disclosure relates to the field of communications, and more particularly to a method and apparatus for determining a relationship between a PTRS port and a DMRS port, medium and product.

### BACKGROUND

In a 5G New Radio (NR) system, a Phase Tracking Reference Signal (PTRS) is designed, and the PTRS is used to estimate a Common Phase Error (CPE).

For an NR uplink transmission, the communication protocol supports only a maximum of 4 layers of transmission. Therefore, in the process of NR uplink transmission, a User Equipment (UE) adopts a layer mapping scheme of 1 Code Word (CW) to 1-4 layers; for the above-mentioned layer mapping scheme, the UE determines one or two uplink DMRS ports associated with an uplink PTRS port from 4 uplink DMRS ports, and sends a Demodulation Reference Signal (DMRS) from at most 4 antenna ports.

### SUMMARY

Embodiments of the present disclosure provide a method and apparatus for determining a relationship between a PTRS port and a DMRS port, medium and product. The technical solution is as follows.

According to one aspect of an embodiment of the present disclosure, a method for determining a relationship between a PTRS port and a DMRS port is provided, the method being performed by a terminal, and the method including:
in case a target layer mapping scheme corresponding to n code words CWs is used, determining an association relationship between an uplink PTRS port and an uplink DMRS port based on downlink control information DCI,
in which a maximum number of uplink DMRS ports is 8, a value of n is 1 or 2, and the target layer mapping scheme is a layer mapping scheme of type 1 or a layer mapping scheme of type 2.

According to one aspect of an embodiment of the present disclosure, a method for determining a relationship between a PTRS port and a DMRS port is provided, the method being performed by a network device, the method including:
transmitting downlink control information to a terminal, in which the downlink control information is used for indicating an association relationship between an uplink PTRS port and an uplink DMRS port in case of the terminal using a target layer mapping scheme corresponding to n code words;
in which a maximum number of uplink DMRS ports is 8, a value of n is 1 or 2, and the target layer mapping scheme is a layer mapping scheme of type 1 or a layer mapping scheme of type 2.

According to another aspect of an embodiment of the present disclosure, an apparatus for determining a relationship between a PTRS port and a DMRS port is provided, the apparatus including:
a first processing module configured to determine an association relationship between an uplink PTRS port and an uplink DMRS port based on DCI in case of adopting a target layer mapping scheme corresponding to n CWs;
in which a maximum number of uplink DMRS ports is 8, a value of n is 1 or 2, and the target layer mapping scheme is a layer mapping scheme of type 1 or a layer mapping scheme of type 2.

According to another aspect of an embodiment of the present disclosure, an apparatus for determining a relationship between a PTRS port and a DMRS port is provided, the apparatus including:
a second transmission module configured to transmit downlink control information to a terminal, in which the downlink control information is used for indicating an association relationship between an uplink PTRS port and an uplink DMRS port in case of the terminal using a target layer mapping scheme corresponding to n code words;
in which a maximum number of uplink DMRS ports is 8, a value of n is 1 or 2, and the target layer mapping scheme is a layer mapping scheme of type 1 or a layer mapping scheme of type 2.

According to another aspect of an embodiment of the present disclosure, a terminal is provided, which includes:
a processor; and
a transceiver coupled to the processor; in which
the processor is configured to load and execute executable instructions to implement a method for determining a relationship between a PTRS port and a DMRS port as described in the various aspects above.

According to another aspect of an embodiment of the present disclosure, a network device is provided, which includes:
a processor; and
a transceiver coupled to the processor; in which
the processor is configured to load and execute executable instructions to implement a method for determining a relationship between a PTRS port and a DMRS port as described in the various aspects above.

According to another aspect of an embodiment of the present disclosure, a computer-readable storage medium is provided, which has stored therein at least one instruction, at least one program, a set of codes, or a set of instructions loaded and executed by a processor to implement a method for determining a relationship between a PTRS port and a DMRS port as described in the various aspects above.

According to another aspect of an embodiment of the present disclosure, a computer program product (or computer program) is provided, which includes computer instructions stored in a computer-readable storage medium; a processor of a computer device reads the computer instructions from the computer-readable storage medium, and executes the computer instructions to cause the computer device to perform the method for determining a relationship between a PTRS port and a DMRS port as described in the various aspects above.

According to another aspect of an embodiment of the present disclosure, a chip is provided, which includes editable logic circuitry and/or program instructions for implementing, when the chip is running, a method for determining a relationship between a PTRS port and a DMRS port as described in the various aspects above.

The technical solutions provided by the embodiments of the present disclosure may include the following advantageous effects.

In the above-mentioned method for determining the relationship between a PTRS port and a DMRS port, when a terminal uses a target layer mapping scheme corresponding to n code words, an uplink DMRS port associated with an uplink PTRS port is determined from at most 8 uplink DMRS ports based on downlink control information, and the method is used for supporting the implementation of relevant functions of the uplink PTRS port and the uplink DMRS port corresponding to the use of at most 8 antenna ports under different layer mapping schemes, for example, for supporting the terminal to use the uplink PTRS port and the uplink DMRS port corresponding to the use of 8 antenna ports to perform a co-phase error estimation under different layer mapping schemes.

It is to be understood that both the foregoing general description and the following detailed description are illustrative and explanatory only and are not restrictive of the present disclosure.

### BRIEF DESCRIPTION OF THE DRAWINGS

To more clearly illustrate the technical solutions in the embodiments of the present disclosure, a brief description will be given below which need to be used in the description of the embodiments; obviously, the drawings in the description below are only some embodiments of the present disclosure, and it would have been obvious for a person skilled in the art to obtain other drawings according to these drawings without involving any inventive effort.
FIG 1 is a block diagram showing a communication system shown according to an exemplary embodiment;
FIG 2 is a flow chart showing a method for determining a relationship between a PTRS port and a DMRS port according to an exemplary embodiment;
FIG. 3 is a diagram showing a mapping between code words and transmission layers according to an exemplary embodiment;
FIG. 4 is a diagram showing a mapping between code words and transmission layers according to another exemplary embodiment;
FIG. 5 is a diagram showing a mapping between code words and transmission layers according to another exemplary embodiment;
FIG. 6 is a diagram showing a mapping between code words and transmission layers according to another exemplary embodiment;
FIG 7 is a flow chart showing a method for determining a relationship between a PTRS port and a DMRS port according to another exemplary embodiment;
FIG 8 is a flow chart showing a method for determining a relationship between a PTRS port and a DMRS port according to another exemplary embodiment;
FIG 9 is a flow chart showing a method for determining a relationship between a PTRS port and a DMRS port according to another exemplary embodiment;
FIG 10 is a flow chart showing a method for determining a relationship between a PTRS port and a DMRS port according to another exemplary embodiment;
FIG 11 is a flow chart showing a method for determining a relationship between a PTRS port and a DMRS port according to another exemplary embodiment;
FIG 12 is a flow chart showing a method for determining a relationship between a PTRS port and a DMRS port according to another exemplary embodiment;
FIG 13 is a flow chart showing a method for determining a relationship between a PTRS port and a DMRS port according to another exemplary embodiment;
FIG 14 is a flow chart showing a method for determining a relationship between a PTRS port and a DMRS port according to another exemplary embodiment;
FIG. 15 is a block diagram showing an apparatus for determining a relationship between a PTRS port and a DMRS port according to an exemplary embodiment;
FIG. 16 is a block diagram showing an apparatus for determining a relationship between a PTRS port and a DMRS port according to another exemplary embodiment;
FIG 17 is a block diagram showing a terminal according to an exemplary embodiment; and
FIG 18 is a structural diagram showing a network device shown according to an exemplary embodiment.

### DETAILED DESCRIPTION

Reference will now be made in detail to exemplary embodiments, examples of which are illustrated in the accompanying drawings. Where the following description refers to the accompanying drawings, like numbers in different drawings indicate the same or similar elements, unless otherwise indicated. The embodiments described in the following exemplary embodiments do not represent all embodiments consistent with the present disclosure. Rather, they are merely examples of apparatuses and methods consistent with certain aspects of the present disclosure as detailed in the appended claims.

Where the following description refers to the accompanying drawings, like numbers in different drawings indicate the same or similar elements, unless otherwise indicated. The implementations described in the following illustrative examples do not represent all implementations consistent with the embodiments of the present disclosure. Rather, they are merely examples of apparatus and methods consistent with certain aspects of the embodiments of the present disclosure as detailed in the appended claims.

The terminology used in the embodiments of the present disclosure is for the purpose of describing particular embodiments only and is not intended to be limiting of the embodiments of the present disclosure. As used in the embodiments of the present disclosure and the appended claims, the singular forms "a", "an", and "the" are intended to include the plural forms as well, unless the context clearly indicates otherwise. It should also be understood that the term "and/or" as used herein refers to and encompasses any and all possible combinations of one or more of the associated listed items.

It should be understood that, although the terms first, second, third, etc. may be used for the embodiments of the present disclosure to describe various information, such information should not be limited to these terms. These terms are only used to distinguish one type of information from another. For example, the first information may also be referred to as the second information, and similarly, the second information may also be referred to as the first information, without departing from the scope of the embodiments of the present disclosure. Depending on the context, the word "if' as used herein may be interpreted as "when......" or "while......" or "in response to......", and the word "in response to......" as used herein may also be interpreted as "in the case where......".

For purposes of brevity and ease of understanding, the terms "greater than" or "less than" are used herein when characterizing size relationships. However, for a person skilled in the art, it can be understood that: the term "greater than" also encompasses the meaning of "greater than or equal to", and "less than" also encompasses the meaning of "less than and equal to".

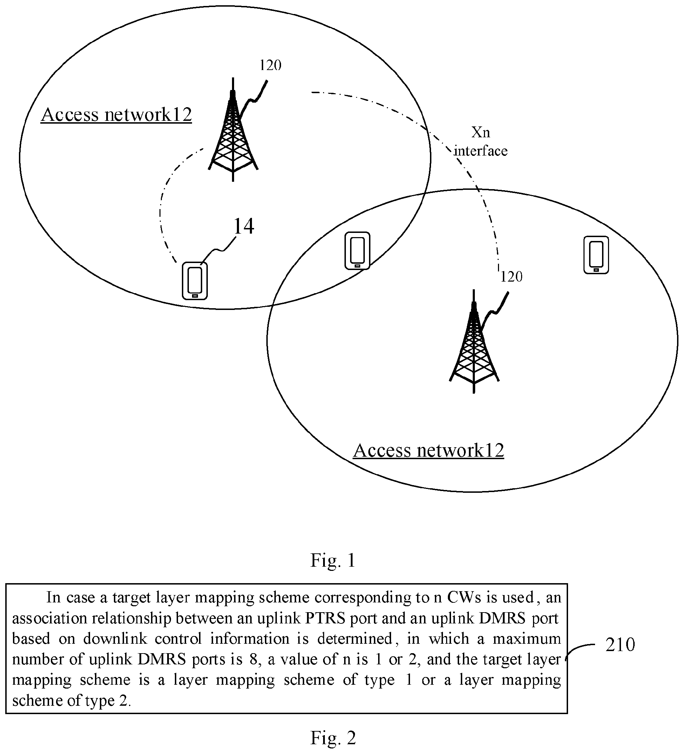

FIG. 1 illustrates a block diagram showing a communication system provided by an exemplary embodiment of the present disclosure, which may include: an access network 12 and a user equipment 14.

Several network devices 120 are included in the access network 12. Network equipment (also referred to as access network equipment) 120 may be a base station, which is a type of device deployed in an access network to provide wireless communication functionality for user equipment (simply "terminals ") 14. A base station may include various forms of macro base stations, micro base stations, relay stations, access points, etc. In a system using different radio access technologies, the name of a device with a base station function may be different, for example, in a Long Term Evolution (LTE) system, it is called eNodeB or eNB; in the 5G NR (New Radio) system, it is called gNodeB or gNB. As communication technologies evolve, the description of a "base station" may change. To facilitate the description of the embodiments of the present disclosure, the means for providing wireless communication functionality for the user equipment 14 described above are collectively referred to as a network device. Alternatively, the communication interface between network devices 120 is an Xn interface.

The user equipment 14 may include various hand-held devices with wireless communication capabilities, on-board devices, wearable devices, computing devices or other processing devices connected to wireless modems, as well as various forms of user equipment, Mobile Station (MS), terminal device, etc. For convenience of description, the above-mentioned devices are collectively referred to as user equipment. The network device 120 and the user equipment 14 communicate with each other via some air interface technology, such as a Uu interface. Alternatively, the user equipment 14 supports performing a small data transmission procedure in an inactive state.

Illustratively, there are two communication scenarios between the network device 120 and the user equipment 14: an uplink communication scenario and a downlink communication scenario. The uplink communication is to transmit a signal to the network device 120; and the downlink communication is to transmit a signal to the user equipment 14.

The technical solutions of the embodiments of the present disclosure can be applied to various communication systems, for example: a Global System of Mobile Communication (GSM) system, a Code Division Multiple Access (CDMA) system, a Wideband Code Division Multiple Access (WCDMA) system and a General Packet Radio Service (GPRS), a Long Term Evolution (LTE) system, an LTE Frequency Division Duplex (FDD) system, an LTE Time Division Duplex (TDD) system, an Advanced Long Term Evolution (LTE-A) system, a New Radio (NR) system, an evolution system of a NR system, an LTE-based access to Unlicensed spectrum (LTE-U) system, a NR-U system, a Universal Mobile Telecommunication System (UMTS), a Worldwide Interoperability for Microwave Access (WiMAX) communication system, a Wireless Local Area Networks (WLAN), a wireless network (Wi-Fi^{™}), a next generation communication system or other communication system, etc.

In general, the conventional communication system supports a limited number of connections and is easy to implement, however, with the development of communication technology, the mobile communication system will support not only the conventional communication but also, for example, Device to Device (D2D) communication, Machine to Machine (M2M) communication, Machine Type Communication (MTC), Vehicle to Vehicle (V2V) communication and Vehicle to Everything (V2X) system, etc. Embodiments of the present disclosure may also be applied to these communication systems.

FIG. 2 is a flow chart showing a method for determining a relationship between a PTRS port and a DMRS port, which is applied to a terminal of the communication system shown in FIG 1, according to an exemplary embodiment of the present disclosure, the method including the following steps.

In step 210, in case a target layer mapping scheme corresponding to n CWs is used, an association relationship between an uplink PTRS port and an uplink DMRS port based on downlink control information is determined, in which a maximum number of uplink DMRS ports is 8, a value of n is 1 or 2, and the target layer mapping scheme is a layer mapping scheme of type 1 or a layer mapping scheme of type 2.

Illustratively, the above-mentioned layer mapping scenario for determining an association relationship between an uplink PTRS port and an uplink DMRS port includes any one of:
a layer mapping scheme of type 1 corresponding to 1 code word;
a layer mapping scheme of type 2 corresponding to 1 code words;
a layer mapping scheme of type 1 corresponding to 2 code words; and
a layer mapping scheme of type 2 corresponding to 2 code words.

### Layer mapping scheme for type 1:

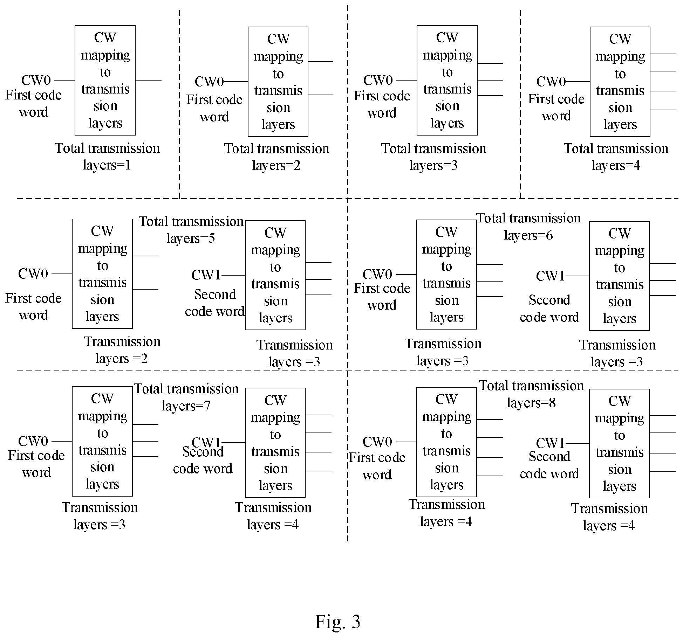

Taking the maximum number of total transport layers being 8 layers as an example, as shown in FIG 3, a layer mapping scheme of type 1 includes 8 layer mapping schemes corresponding to 1 code word and 2 code words. In case of the layer mapping scheme of type 1, the number of transmission layers corresponding to 1 code word after performing a layer mapping is greater than 0 and less than or equal to 4. The 2 code words include a first code word and a second code word; the first code word corresponds to a number of first transmission layers after performing the layer mapping, and the second code word corresponds to a number of second transmission layers after performing the layer mapping; in case of the layer mapping scheme of type 1, a layer number difference between the number of the first transmission layers and the number of the second transmission layers is 0 or 1, and a sum of the number of the first transmission layers and the number of the second transmission layers is greater than 4 and less than or equal to 8. Illustratively, layer mapping scheme of type 1 corresponding to 1 code word (including CW0) includes the following 4 types:
· CW0 mapping to 1 transmission layer;
   for example, CW0 mapping to transmission layer 1 for a total of 1 transmission layer ;
· CW0 mapping to 2 transmission layers;
   for example, CW0 maps to transmission layers 1 and 2 for a total of 2 transmission layers;
· CW0 mapping to 3 transmission layers;
   for example, CW0 maps to transmission layers 1 through 3 for a total of 3 transmission layers;
· CW0 mapping to 4 transmission layers;
   for example, CW0 maps to transmission layers 1 through 4 for a total of 4 transmission layers.

A layer mapping scheme of type 1 corresponding to 2 code words (including CW0 and CW1) includes the following 4 types:
· CW0 mapping to 2 transmission layers and CW1 mapping to 3 transmission layers;
   for example, CW0 maps to transmission layers 1 and 2, CW1 maps to transmission layers 3 to 5 for a total of 5 transmission layers;
· CW0 mapping to 3 transmission layers and CW1 mapping to 3 transmission layers;
   for example, CW0 maps to transmission layers 1 through 3, CW1 maps to transmission layers 4 through 5 for a total of 6 transmission layers;
· CW0 mapping to 3 transmission layers and CW1 mapping to 4 transmission layers;
   for example, CW0 maps to transmission layers 1 through 3, CW1 maps to transmission layers 4 through 5 for a total of 7 transmission layers;
· CW0 mapping to 4 transmission layers and CW1 maps to 4 transmission layers;
   for example, CW0 maps to transmission layers 1 through 4, CW1 maps to transmission layers 5 to 8 for a total of 8 transmission layers.

### Layer mapping scheme for type 2:

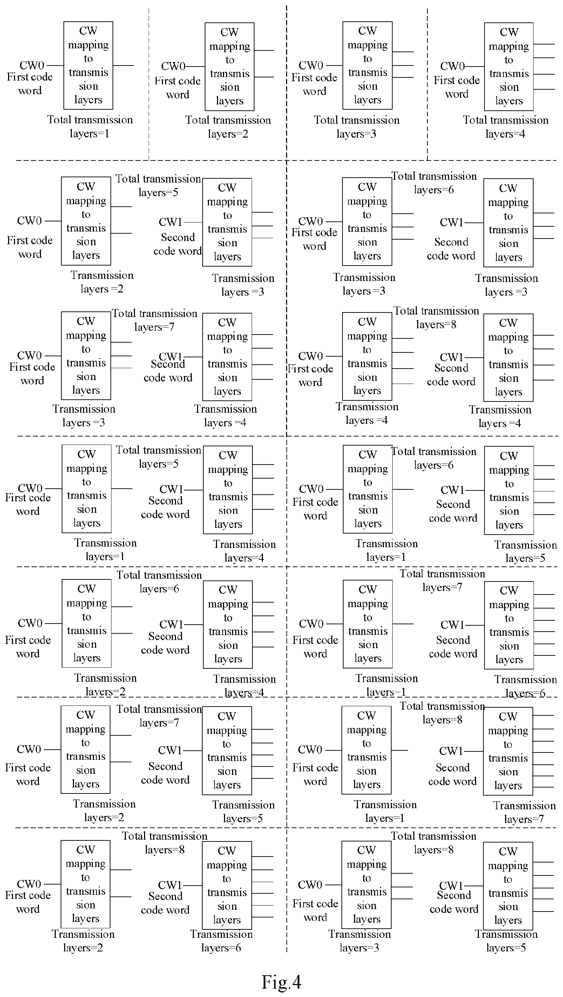

Taking the maximum number of total transmission layers as an example, as shown in FIG 4, a layer mapping scheme of type 2 includes 1 code word and 16 layer mapping schemes corresponding to 2 code words. In case of the layer mapping scheme of type 2, the number of transmission layers corresponding to 1 code word after performing the layer mapping is greater than 0 and less than or equal to 4.

Illustratively, as shown in FIG 4, a layer mapping scheme of type 2 corresponding to 1 code word (including CW0) includes the following 4 types:
· CW0 mapping to 1 transmission layer;
   for example, CW0 mapping to transmission layer 1 for a total of 1 transmission layer;
· CW0 mapping to 2 transmission layers;
   for example, CW0 maps to transmission layers 1 and 2 for a total of 2 transmission layers;
· CW0 mapping to 3 transmission layers;
   for example, CW0 maps to transmission layers 1 through 3 for a total of 3 transmission layers;
· CW0 mapping to 4 transmission layers;
   for example, CW0 maps to transmission layers 1 through 4 for a total of 4 transmission layers.

The 2 code words include a first code word and a second code word; the first code word corresponds to the number of first transmission layers after performing the layer mapping, and the second code word corresponds to the number of second transmission layers after performing the layer mapping; in case of the layer mapping scheme of type 2, the layer number difference between the number of the first transmission layers and the number of the second transmission layers is any value from 0 to 6, and the sum of the number of the first transmission layers and the number of the second transmission layers is greater than 1 and less than or equal to 8.

It can be seen from the above-mentioned description of the layer mapping scheme of type 1 that the difference between the number of first transmission layers and the number of second transmission layers in the layer mapping scheme of type 1 is zero or one, and the difference between the number of layers between the number of first transmission layers and the number of second transmission layers in the layer mapping scheme of type 2 is any value from 0 to 6; and it can be seen that the layer mapping scheme of type 2 is more flexible than the layer mapping scheme of type 1. Taking the maximum value 8 of the total number of transmission layers as an example, the layer number difference between the first number of transmission layers and the second number of transmission layers in the layer mapping scheme of type 2 can be any value from zero to six. For example, CW0 maps to a transmission layer 1, CW1 maps to transmission layers 2 to 7 for a total number of 8 transmission layers, and the layer number difference between the number of the first transmission layers and the number of the second transmission layers is six.

Alternatively, the layer mapping scheme of type 2 includes at least one of:
•· transmission of layers 5 to 8 supports transmission of two code words;
   or,
•·transmission of more than 4 layers (including 4 layers) supports transmission of two code words;
   or,
·transmission of more than 2 layers supports transmission of two code words.

**For the scheme of transmission of layers 5 to 8 supports transmission of two code words in the layer mapping scheme of type 2.**

As shown in FIG 4, when the scheme of transmission of layers 5 to 8 supports transmission of two code words in the layer mapping scheme of type 2, a layer mapping scheme of type 2 corresponding to 2 code words (including CW0 and CW1) includes the following 12 types:
· CW0 mapping to 1 transmission layer and CW1 mapping to 4 transmission layers;
   for example, CW0 maps to transmission layer 1, CW1 maps to transmission layers 2 through 5 for a total number of 5 transmission layers;
· CW0 mapping to 2 transmission layers and CW1 mapping to 3 transmission layers;
   for example, CW0 maps to transmission layers 1 and 2, CW1 maps to transmission layers 3 to 5 for a total number of 5 transmission layers;
· CW0 mapping to 1 transmission layer and CW1 mapping to 5 transmission layers;
   for example, CW0 maps to transmission layer 1, CW1 maps to transmission layers 2 through 6 for a total number of 6 transmission layers;
· CW0 mapping to 2 transmission layers and CW1 mapping to 4 transmission layers;
   for example, CW0 maps to transmission layers 1 and 2, CW1 maps to transmission layers 3 to 6 for a total number of 6 transmission layers;
· CW0 mapping to 3 transmission layers and CW1 mapping to 3 transmission layers;
   for example, CW0 maps to transmission layers 1 through 3, CW1 maps to transmission layers 4 through 6 for a total number of 6 transmission layers;
· CW0 mapping to 1 transmission layer and CW1 mapping to 6 transmission layers;
   for example, CW0 maps to transmission layer 1, CW1 maps to transmission layers 2 through 7 for a total number of 7 transmission layers;
· CW0 mapping to 2 transmission layers and CW1 mapping to 5 transmission layers;
   for example, CW0 maps to transmission layers 1 and 2, CW1 maps to transmission layers 3 to 7 for a total number of 7 transmission layers;
· CW0 mapping to 3 transmission layers and CW1 mapping to 4 transmission layers;
   for example, CW0 maps to transmission layers 1 through 3, CW1 maps to transmission layers 4 through 7 for a total number of 7 transmission layers;
· CW0 mapping to 1 transmission layer and CW1 mapping to 7 transmission layers;
   for example, CW0 maps to transmission layer 1, CW1 maps to transmission layers 2 to 8 for a total number of 8 transmission layers;
· CW0 mapping to 2 transmission layers and CW1 mapping to 6 transmission layers;
   for example, CW0 maps to transmission layers 1 and 2, CW1 maps to transmission layers 3 to 8 for a total number of 8 transmission layers;
· CW0 mapping to 3 transmission layers and CW1 mapping to 5 transmission layers;
   for example, CW0 maps to transmission layers 1 through 3, CW1 maps to transmission layers 4 to 8 for a total number of 8 transmission layers;
· CW0 maps to 4 transmission layers and CW1 maps to 4 transmission layers.
   For example, CW0 maps to transmission layers 1 through 4, CW1 maps to transmission layers 5 to 8 for a total number of 8 transmission layers.

**For the scheme of transmission of more than 4 layers (including 4 layers) supports transmission of two code words in the layer mapping scheme of type 2.**

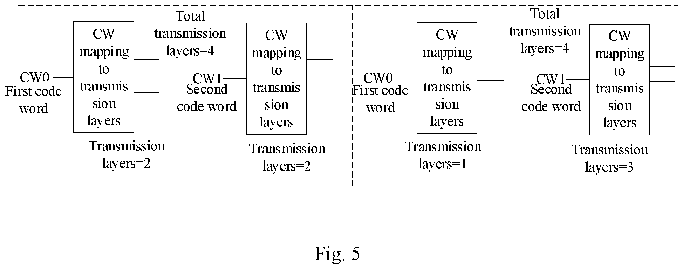

As shown in FIG 5, when the scheme of transmission of layers 4 to 8 supports transmission of two code words in the layer mapping scheme of type 2, a layer mapping scheme of type 2 corresponding to 2 code words (including CW0 and CW1) includes the following 2 types in addition to those in FIG 4:
· CW0 mapping to 1 transmission layer and CW1 mapping to 3 transmission layers;
   for example, CW0 maps to transmission layer 1, CW1 maps to transmission layers 2 through 4 for a total number of 4 transmission layers;
· CW0 mapping to 2 transmission layers and CW1 mapping to 2 transmission layers;
   for example, CW0 maps to transmission layers 1 and 2, CW1 maps to transmission layers 3 and 4 for a total number of 4 transmission layers.

**For the scheme of transmission of more than 2 layers supports transmission of two code words in the layer mapping scheme of type 2.**

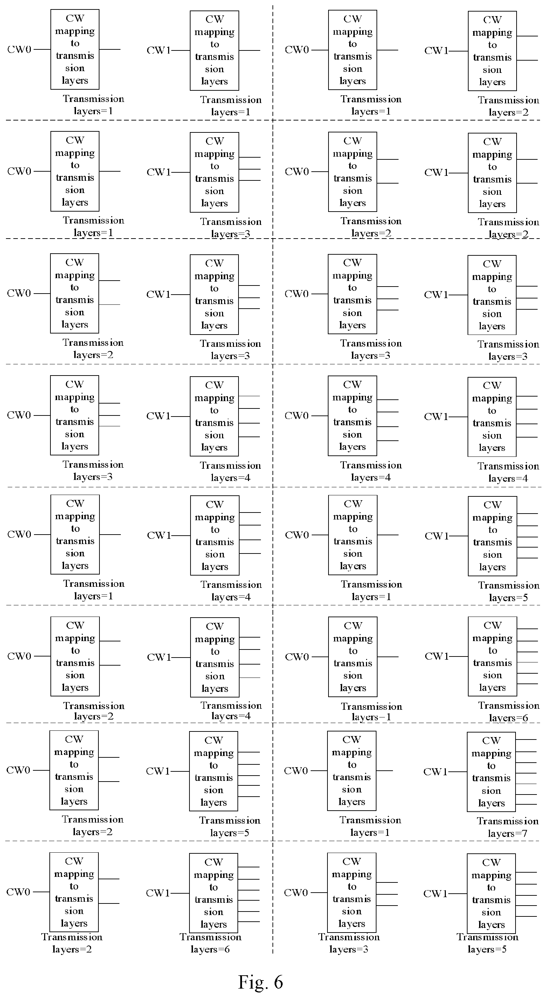

As shown in FIG 6, when the scheme of transmission of layers 2 to 8 supports transmission of two code words in the layer mapping scheme of type 2, a layer mapping scheme of type 2 corresponding to 2 code words (including CW0 and CW1) includes the following 4 types in addition to those in FIG 4:
· CW0 mapping to 1 transmission layer and CW1 mapping to 1 transmission layer;
   for example, CW0 maps to transmission layer 1, CW1 maps to transmission layer 2 for a total number of 2 transmission layers;
· CW0 mapping to 1 transmission layer and CW1 mapping to 2 transmission layers;
   for example, CW0 maps to transmission layer 1, CW1 maps to transmission layers 2 to 3 for a total number of 3 transmission layers;
· CW0 mapping to 1 transmission layer and CW1 mapping to 3 transmission layers;
   for example, CW0 maps to transmission layer 1, CW1 maps to transmission layers 2 through 4 for a total number of 4 transmission layers;
· CW0 mapping to 2 transmission layers and CW1 mapping to 2 transmission layers;
   for example, CW0 maps to transmission layers 1 and 2, CW1 maps to transmission layers 3 and 4 for a total number of 4 transmission layers.

In the above-mentioned different layer mapping scenario, a terminal determines one or two uplink DMRS ports associated with an uplink PTRS port from at most 8 uplink DMRS ports allocated correspondingly via a Physical Uplink Shared Channel (PUSCH)/Physical Uplink Control Channel (PUCCH) based on downlink control information (DCI).

Illustratively, in response to the number of uplink PTRS ports being 1, the terminal determines an uplink DMRS port associated with the uplink PTRS port from at most 8 uplink DMRS ports correspondingly allocated by the PUSCH based on the indication of the information field in the downlink control information.

Illustratively, in response to the number of uplink PTRS ports being 2, the terminal determines a first uplink DMRS port associated with the first uplink PTRS port and a second uplink DMRS port associated with the second uplink PTRS port from at most 8 uplink DMRS ports correspondingly allocated by the PUSCH based on an indication of an information field in the downlink control information.

The second uplink PTRS port refers to another one of the 2 uplink PTRS ports except the first uplink PTRS port; the second uplink DMRS port refers to another one of the at most 8 uplink DMRS ports except the first uplink DMRS port.

Alternatively, the at most 8 uplink DMRS ports are assigned by the network device to the terminal. Illustratively, terminals are assigned by the network device to use all or part of the uplink DMRS ports. For example, there are 8 uplink DMRS ports available for allocation by a network device, and the network device allocates some or all the 8 uplink DMRS ports for a terminal to use; there are 12 uplink DMRS ports available for allocation by the network device, and the terminal is allocated to use some of the 12 uplink DMRS ports by the network device. Taking allocating 8 uplink DMRS ports for a terminal as an example, a network device allocates all the 8 uplink DMRS ports for the terminal to use; or the network device allocates port 1, a port 3, a port 5 and a port 7 of the 8 uplink DMRS ports for the terminal to use; or the network device allocates ports 0 to 7 of the 12 uplink DMRS ports for the terminal to use; or, the terminals are assigned by the network device to use a port 0, a port 2, a port 4, a port 6, a port 8, and a port 10 of the 12 uplink DMRS ports.

Alternatively, the number of uplink PTRS ports is configured by the network device for the terminal. For example, the terminal determines that the number of uplink PTRS ports is 1 or 2 based on the indication of downlink control information. For another example, a terminal receives high-layer signaling, such as Radio Resource Control (RRC) signaling, transmitted by a network device; based on the indication of the higher layer signaling, it is determined that the number of uplink PTRS ports is 1 or 2.

Alternatively, the number of uplink PTRS ports is determined by the terminal. For example, in the scenario of PUSCH transmission based on a Code Book (CB), the number of uplink PTRS ports is determined in any one of the following manners.
(1) The terminal determines that the number of uplink PTRS ports is 1 in response to a Sounding Reference Signal Resource Indicator (SRI) indicating only one Sounding Reference Signal (SRS) resource in the scenario of CB-based PUSCH transmission using a full coherent transmission mode.
(2) The terminal determines that the number of uplink PTRS ports is 1 in response to the number of layers indicated by the Transmitted Precoding Matrix Indicator (TPMI) is 1 or 2 in the scenario of CB-based Physical Uplink Shared Channel (PUSCH) transmission with a partial coherent or non-coherent transmission mode.
(3) In the scenario of CB-based PUSCH transmission using a full coherent transmission mode, the terminal determines that the number of uplink PTRS ports is 2 in response to the SRI indicating only one SRS resource.
(4) The terminal determines that the number of uplink PTRS ports is 2 in response to the number of layers indicated by the TPMI being 2 layers and above or 3 layers and above in the scenario of CB-based PUSCH transmission using a partial coherent or incoherent transmission mode.

Illustratively, the terminal receives downlink control information transmitted on a Media Access Control (MAC) layer.

Illustratively, the above-mentioned at most 8 uplink DMRS ports (i.e., antenna ports corresponding to the DMRS) can be antenna ports mapped to the same antenna panel or different antenna panels; that is, the above-mentioned at most 8 uplink DMRS ports are antenna ports mapped onto M antenna panels, M being a positive integer less than or equal to 8. For example, 4 of the 8 uplink DMRS ports are mapped onto a first antenna panel and the remaining 4 of the 8 uplink DMRS ports are mapped onto a second antenna panel.

It should be noted that the above-mentioned at most 8 corresponds to a range from 0 to 8, for example, the at most 8 uplink DMRS ports refer to any one of 8 cases: 1 uplink DMRS port, 2 uplink DMRS ports, 3 uplink DMRS ports, 4 uplink DMRS ports, 5 uplink DMRS ports, 6 uplink DMRS ports, 7 uplink DMRS ports, and 8 uplink DMRS ports.

In summary, the present embodiment provides a method for determining the relationship between a PTRS port and a DMRS port. When a terminal uses a target layer mapping scheme corresponding to n code words, an uplink DMRS port associated with an uplink PTRS port is determined from at most 8 uplink DMRS ports based on downlink control information, and the method is used for supporting the implementation of relevant functions of the uplink PTRS port and the uplink DMRS port corresponding to the use of at most 8 antenna ports under different layer mapping schemes, for example, for supporting the terminal to use the uplink PTRS port and the uplink DMRS port corresponding to the use of 8 antenna ports to perform a co-phase error estimation in case of the layer mapping scheme of type 1; for another example, an uplink PTRS port and an uplink DMRS port corresponding to 8 antenna ports are used to support a terminal to perform a CPE estimation in case of a layer mapping scheme of type 2.

With different layer mapping schemes, the number of CWs is 2, and at most 8 uplink DMRS ports are divided into 2 DMRS port groups, and the 2 CWs correspond to the 2 DMRS port groups on a one-to-one basis, and a first information field in downlink control information can be defined to indicate an association relationship between an uplink PTRS port and an uplink DMRS port.

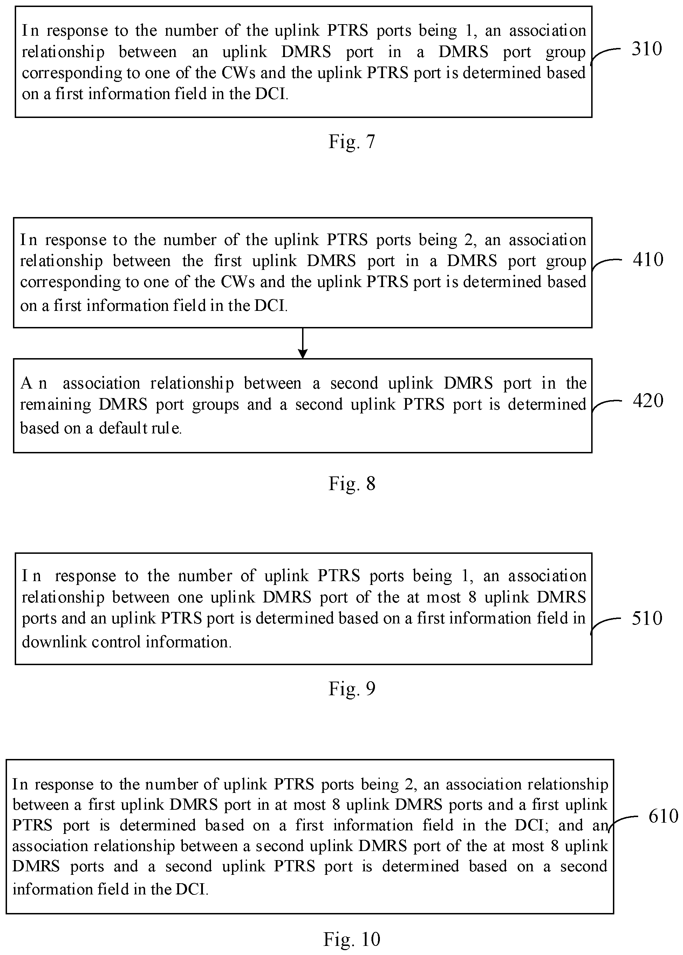

As shown in FIG 7, in case the number of uplink PTRS ports is 1, step 210 can be implemented by step 310 as follows.

In step 310, in response to the number of the uplink PTRS ports being 1, an association relationship between an uplink DMRS port in a DMRS port group corresponding to one of the CWs and the uplink PTRS port is determined based on a first information field in the DCI.

2 CWs include a first CW and a second CW, and 2 DMRS port groups include a first DMRS port group and a second DMRS port group; the first CW corresponds to a first DMRS port group and the second CW corresponds to a second DMRS port group. The terminal determines an association relationship between an uplink DMRS port in a first DMRS port group corresponding to a first CW and an uplink PTRS port based on a first information field in downlink control information; or, determines an association relationship between an uplink DMRS port in a second DMRS port group corresponding to a second CW and an uplink PTRS port based on a first information field in downlink control information.

The first information field includes at most 3 bits. For example, the first information field includes 2 bits, and for example, the first information field includes 3 bits.

Alternatively, when the number of uplink DMRS ports is 4, the first information field includes 2 bits. Alternatively, when the number of uplink DMRS ports is 8, the first information field includes at most 3 bits.

Illustratively, the value of M bits on the first information field can be used for indicating the port number of an uplink DMRS port allocated in a DMRS port group; for example, when the first information field includes 2 bits, and the port numbers of 4 uplink DMRS ports in 2 DMRS port groups are 0 to 3, the value of the 2 bits can be used for indicating the port numbers of the uplink DMRS ports.

In addition, the value of M bits on the first information field can be used for indicating a sequencing position of an uplink DMRS port allocated in a DMRS port group; for example, when the first information field includes 3 bits, the uplink DMRS ports allocated in one DMRS port group are a port 0, a port 2, a port 4, a port 6, a port 8 and a port 10 in sequence, then "000" indicates a port 0, "001" indicates a port 2, "010" indicates a port 4, "011" indicates a port 6, "100" indicates a port 8 and "101" indicates a port 10; for another example, if the allocated uplink DMRS ports in a DMRS port group are a port 2, a port 5, a port 8 and a port 1, then "000" indicates a port 2, "001" indicates a port 5, "010" indicates a port 8 and "011" indicates a port 1.

Illustratively, M bits are used for indicating one uplink DMRS port in a DMRS port group corresponding to a CW with a higher Modulation and Coding Scheme (MCS); that is, the first information field is used for indicating one uplink DMRS port in the DMRS port group corresponding to CW with a higher MCS. For example, when the first CW corresponds to a higher MCS level than the second CW, M bits are used for indicating that an uplink DMRS port in the first DMRS port group corresponding to the first CW is associated with an uplink PTRS port.

In addition, M bits are used for indicating one uplink DMRS port in the DMRS port group with the maximum number of allocated ports when the MCS of 2 CWs is the same; that is, the first information field is used for indicating one uplink DMRS port in the DMRS port group having the maximum number of allocated ports if the MCS of 2 CWs is the same. For example, an uplink DMRS port in each DMRS port group is allocated by a network device, and M bits are used for indicating that an uplink DMRS port in the first DMRS port group is associated with an uplink PTRS port when the MCS level of 2 CWs is the same and the number of allocated ports in the first DMRS port group is greater than the number of allocated ports in the second DMRS port group.

In addition, M bits are used for indicating one uplink DMRS port in the DMRS port group with the minimum number of allocated ports when the MCS of 2 CWs is the same; that is, the first information field is used for indicating one uplink DMRS port in the DMRS port group having the maximum number of allocated ports if the MCS of 2 CWs is the same. For example, an uplink DMRS port in each DMRS port group is allocated by a network device, and M bits are used for indicating that an uplink DMRS port in the second DMRS port group is associated with an uplink PTRS port when the MCS level of 2 CWs is the same and the number of allocated ports in the second DMRS port group is greater than the number of allocated ports in the second DMRS port group.

In addition, M bits are used for indicating one uplink DMRS port in a first DMRS port group corresponding to a first CW; that is, the first information field is used for indicating one uplink DMRS port in the first DMRS port group to which the first CW corresponds.

In addition, M bits are used for indicating one uplink DMRS port in a second DMRS port group corresponding to a second CW; that is, the first information field is used for indicating one uplink DMRS port in the second DMRS port group to which the second CW corresponds.

It should be noted that the above-mentioned "first" in the first CW and "second" in the second CW are only used for distinguishing 2 different CWs and do not include other meanings. Illustratively, the first CW is a first one of the 2 CWs, and the second CW is a second one of the 2 CWs; or, the second CW is a first CW of the 2 CWs and the first CW is a second CW of the 2 CWs.

Alternatively, M bits are used for indicating one uplink DMRS port in a DMRS port group corresponding to the first CW of the 2 CWs when the MCS of the 2 CWs is the same; that is, the first information field is used for indicating one uplink DMRS port in the DMRS port group corresponding to the first CW of the 2 CWs if the MCS of the 2 CWs is the same.

Alternatively, when the number of uplink DMRS ports is 4, the value of M is 2; when the number of uplink DMRS ports is 8, M may have a maximum value of 3, for example M may be 2 or 3.

Alternatively, in case of the layer mapping scheme of type 1, the first information field includes 2 bits; and in case of the layer mapping scheme of type 2, the first information field includes at most 3 bits. For example, when using a layer mapping scheme of type 1 corresponding to 2 CWs, in response to the number of uplink PTRS ports being 1, an association relationship between an uplink DMRS port in a DMRS port group corresponding to one CW and an uplink PTRS port is determined based on an indication of 2 bits of a first information field; as another example, when using a layer mapping scheme of type 2 corresponding to 2 CWs, in response to the number of uplink PTRS ports being 1, an association relationship between an uplink DMRS port in a DMRS port group corresponding to one CW and an uplink PTRS port is determined based on an indication of 2 or 3 bits of the first information field.

In summary, in the method for determining the relationship between a PTRS port and a DMRS port provided in the present embodiment, a terminal determines an uplink DMRS port associated with an uplink PTRS port from at most 8 uplink DMRS ports based on downlink control information when using a target layer mapping scheme corresponding to 2 code words, and the method is used for supporting the association of an uplink PTRS port on one of the at most 8 uplink DMRS ports in the layer mapping scheme corresponding to 2 code words.

As shown in FIG 8, when the number of uplink PTRS ports is 2, step 210 can be implemented by steps 410 to 420 as follows.

In step 410, in response to the number of the uplink PTRS ports being 2, an association relationship between the first uplink DMRS port in a DMRS port group corresponding to one of the CWs and the uplink PTRS port is determined based on a first information field in the DCI.

2 CWs include a first CW and a second CW, and 2 DMRS port groups include a first DMRS port group and a second DMRS port group; the first CW corresponds to a first DMRS port group and the second CW corresponds to a second DMRS port group. The 2 uplink PTRS ports include a first uplink PTRS port and a second uplink PTRS port; the first information field in the downlink control information is used for indicating a first uplink DMRS port associated with the first uplink PTRS port. Illustratively, the terminal determines an association relationship between a first uplink DMRS port in a first DMRS port group corresponding to a first CW and a first uplink PTRS port based on a first information field in downlink control information; or, determines the association relationship between the first uplink DMRS port in the second DMRS port group corresponding to the second CW and the first uplink PTRS port based on the first information field in the downlink control information.

The first information field includes at most 3 bits. For example, the first information field includes 2 bits, and for example, the first information field includes 3 bits.

Alternatively, when the number of uplink DMRS ports is 4, the first information field includes 2 bits. Alternatively, when the number of uplink DMRS ports is 8, the first information field includes at most 3 bits.

Illustratively, the value of M bits on the first information field may be used for indicating the port numbers of the uplink DMRS ports allocated in one DMRS port group; or, the value of M bits in the first information field may be used for indicating a sequencing position of the allocated uplink DMRS ports in a DMRS port group.

Illustratively, M bits are used for indicating a first uplink DMRS port in a DMRS port group corresponding to a CW with a higher MCS; that is, the first information field is used for indicating the first uplink DMRS port in the DMRS port group corresponding to the CW with a higher MCS. For example, when the MCS level corresponding to the first CW is lower than the MCS level corresponding to the second CW, M bits are used for indicating that the first uplink DMRS port in the second DMRS port group corresponding to the second CW is associated with the first uplink PTRS port.

In addition, M bits are used for indicating the first uplink DMRS port in the DMRS port group with the maximum number of allocated ports when the MCS of 2 CWs is the same; that is, the first information field is used for indicating the first uplink DMRS port in the DMRS port group having the maximum number of allocated ports if the MCS of 2 CWs is the same. For example, an uplink DMRS port in each DMRS port group is allocated by a network device, and M bits are used for indicating that the first uplink DMRS port in the second DMRS port group is associated with the first uplink PTRS port when the MCS level of 2 CWs is the same and the number of allocated ports in the first DMRS port group is smaller than the number of allocated ports in the second DMRS port group.

In addition, M bits are used for indicating the first uplink DMRS port in the DMRS port group with the minimum number of allocated ports when the MCS of 2 CWs is the same; that is, the first information field is used for indicating the first uplink DMRS port in the DMRS port group having the minimum number of allocated ports if the MCS of 2 CWs is the same. For example, an uplink DMRS port in each DMRS port group is allocated by a network device, and M bits are used for indicating that the first uplink DMRS port in the first DMRS port group is associated with the first uplink PTRS port when the MCS level of 2 CWs is the same and the number of allocated ports in the first DMRS port group is smaller than the number of allocated ports in the second DMRS port group.

In addition, M bits are used for indicating the first uplink DMRS port in a first DMRS port group corresponding to a first CW; that is, the first information field is used for indicating the first uplink DMRS port in the first DMRS port group to which the first CW corresponds.

In addition, M bits are used for indicating the first uplink DMRS port in a second DMRS port group corresponding to a second CW; that is, the first information field is used for indicating the first uplink DMRS port in the second DMRS port group to which the second CW corresponds.

It should be noted that the above-mentioned "first" in the first CW and "second" in the second CW are only used for distinguishing 2 different CWs and do not include other meanings. Illustratively, the first CW is a first one of the 2 CWs, and the second CW is a second one of the 2 CWs; or, the second CW is a first CW of the 2 CWs and the first CW is a second CW of the 2 CWs.

Alternatively, M bits are used for indicating the first uplink DMRS port in the DMRS port group corresponding to the first CW of the 2 CWs when the MCS of the 2 CWs is the same; that is, the first information field is used for indicating the first uplink DMRS port in the DMRS port group corresponding to the first CW of the 2 CWs if the MCS of the 2 CWs is the same.

Alternatively, when the number of uplink DMRS ports is 4, the value of M is 2; when the number of uplink DMRS ports is 8, M may have a maximum value of 3, for example M may be 2 or 3.

Alternatively, in case of the layer mapping scheme of type 1, the first information field includes 2 bits; and in case of the layer mapping scheme of type 2, the first information field includes 3 bits. For example, when using a layer mapping scheme of type 1 corresponding to 2 CWs, in response to the number of uplink PTRS ports being 2, an association relationship between the first uplink DMRS port in a DMRS port group corresponding to one CW and the first uplink PTRS port is determined based on an indication of 2 bits of a first information field; as another example, when using a layer mapping scheme of type 2 corresponding to 2 CWs, in response to the number of uplink PTRS ports being 2, an association relationship between the first uplink DMRS port in a DMRS port group corresponding to one CW and the first uplink PTRS port is determined based on an indication of 2 or 3 bits of the first information field.

In step 420, an association relationship between a second uplink DMRS port in the remaining DMRS port groups and a second uplink PTRS port is determined based on a default rule.

The above default rules define a default association relationship between the second uplink PTRS port and the second uplink DMRS port. The terminal may determine a second uplink DMRS port associated with the second uplink PTRS port among the allocated uplink DMRS ports in the remaining DMRS port groups based on the above-mentioned default rule. Alternatively, the above-mentioned default rule may be pre-configured for a terminal by a network device; or, the default rules may be defined by a protocol.

The above-mentioned remaining DMRS port groups refer to another DMRS port group except the DMRS port group where the first uplink DMRS port is located among the 2 DMRS port groups. Illustratively, the remaining DMRS port groups are a first DMRS port group or a second DMRS port group.

Alternatively, the default rules include any one of the following.

The second uplink DMRS port is an uplink DMRS port corresponding to the maximum port number in the remaining DMRS port groups. For example, the uplink DMRS ports allocated in the first/second DMRS port group include a port 0 and a port 1, and the terminal determines an association between port 1 and the second uplink PTRS port.

In addition, the second uplink DMRS port is an uplink DMRS port corresponding to the minimum port number in the remaining DMRS port groups; For example, the uplink DMRS ports allocated in the first/second DMRS port group include a port 3, a port 5 and a port 7, and the terminal determines the association between the port 3 and the second uplink PTRS port.

In addition, the second uplink DMRS port is one uplink DMRS port in the remaining DMRS port groups determined based on a predefined manner.

Illustratively, the predefined manner includes: when the first uplink DMRS port is a G^{th} uplink DMRS port in one of the DMRS port groups, the second uplink DMRS port is an H^{th} uplink DMRS port in the remaining DMRS port groups, H is a remainder of a sum of G and 2 divided by P, P is the minimum number of ports corresponding to the 2 DMRS port groups, a value of G is a positive integer less than 8, and values of H and P are both positive integers not greater than 4. H is represented by a formula: H = (G + 2) mod P, mod represents the remainder after the division operation; it should be noted that when (G + 2) is divided by P, H has a value of P, and H has a value less than or equal to P.

For example, a first DMRS port group is allocated with 3 uplink DMRS ports, and a second DMRS port group is allocated with 5 uplink DMRS ports; the terminal determines that the fifth uplink DMRS port in the second DMRS port group is the first uplink DMRS port, and then determines that the ((5 + 2) mod 3 = 1)^{th} uplink DMRS port in the first DMRS port group is the second uplink DMRS port based on the above-mentioned predefined manner.

In addition, the second uplink DMRS port is an uplink DMRS port indicated by a network device. For example, the network device indicates a fixed one of the 8 uplink DMRS ports as the second uplink DMRS port.

In summary, in the method for determining the relationship between a PTRS port and a DMRS port provided in the present embodiment, a terminal determines a first uplink DMRS port associated with a first uplink PTRS port from uplink DMRS ports allocated for use in one DMRS port group based on downlink control information and determines a second uplink DMRS port associated with a second uplink PTRS port from uplink DMRS ports allocated for use in another DMRS port group based on a default rule when using a target layer mapping scheme corresponding to 2 code words. Thus, 2 uplink DMRS ports corresponding to the 2 uplink PTRS ports on a one-to-one basis are supported when at most 8 uplink DMRS ports are used in a layer mapping scheme corresponding to 2 code words.

Under different layer mapping schemes, when the number of CWs is 1, it can be defined that an information field in downlink control information indicates an uplink DMRS port in the at most 8 uplink DMRS ports associated with an uplink PTRS port.

As shown in FIG 9, when the number of uplink PTRS ports is 1, step 210 can be implemented by step 510 as follows.

In step 510, in response to the number of uplink PTRS ports being 1, an association relationship between one uplink DMRS port of the at most 8 uplink DMRS ports and an uplink PTRS port is determined based on a first information field in downlink control information.

Alternatively, when the number of uplink DMRS ports is 4, the first information field includes 2 bits, the 2 bits in the first information field being used for indicating an association relationship between one of the 4 uplink DMRS ports and an uplink PTRS port. For example, the network device assigns the terminal to use ports 0 to 3 of the uplink DMRS ports, "00" for indicating a port 0, "01" for indicating a port 1, "10" for indicating a port 2, and "11" for indicating a port 3.

Alternatively, when the number of uplink DMRS ports is 8, the first information field includes at most 3 bits, the at most 3 bits in the first information field being used for indicating an association between one of the 8 uplink DMRS ports and an uplink PTRS port. For example, the network device assigns the terminal to use ports 4 to 11 of the uplink DMRS ports, "000" for indicating a port 4, "001" for indicating a port 5, "010" for indicating a port 6, "011" for indicating a port 7, "100" for indicating a port 8, "101" for indicating a port 9, "110" for indicating a port 10, and "111" for indicating a port 11.

In summary, in the method for determining the relationship between a PTRS port and a DMRS port provided in the present embodiment, when a terminal uses a target layer mapping scheme corresponding to 1 code word, an uplink DMRS port associated with an uplink PTRS port is determined from at most 8 uplink DMRS ports allocated for use by the terminal based on an information field in downlink control information, so as to support one uplink DMRS port corresponding to one uplink PTRS port when at most 8 uplink DMRS ports are used in the layer mapping scheme corresponding to 1 code word.

As shown in FIG 10, when the number of uplink PTRS ports is 2, step 210 can be implemented by step 610 as follows.

In step 610, in response to the number of uplink PTRS ports being 2, an association relationship between a first uplink DMRS port in at most 8 uplink DMRS ports and a first uplink PTRS port is determined based on a first information field in the DCI; and an association relationship between a second uplink DMRS port of the at most 8 uplink DMRS ports and a second uplink PTRS port is determined based on a second information field in the DCI.

The 2 uplink PTRS ports include a first uplink PTRS port and a second uplink PTRS port. When the number of uplink DMRS ports is 4, the first information field and the second information field respectively include 2 bits, and the terminal determines a first uplink DMRS port from the 4 uplink DMRS ports based on the indication of the 2 bits in the first information field and determines a second uplink DMRS port from 4 uplink DMRS ports based on the indication of 2 bits in the second information field, in which the second uplink DMRS port refers to other uplink DMRS ports except the first uplink DMRS port in the 4 uplink DMRS ports.

When the number of uplink DMRS ports is 8, the first information field and the second information field respectively include at most 3 bits, and the terminal determines a first uplink DMRS port in the 8 uplink DMRS ports based on the indication of the at most 3 bits in the first information field and determines a second uplink DMRS port from 8 uplink DMRS ports based on the indication of at most 3 bits in the second information field, in which the second uplink DMRS port refers to other uplink DMRS ports except the first uplink DMRS port in the 8 uplink DMRS ports.

Alternatively, the above first information field is a PTRS-DMRS association field (i.e., a PTRS-DMRS association field).

Alternatively, the second information field refers to bits of the MCS field other than the first information field or reserved codepoints (bits) of other information fields on the DCI.

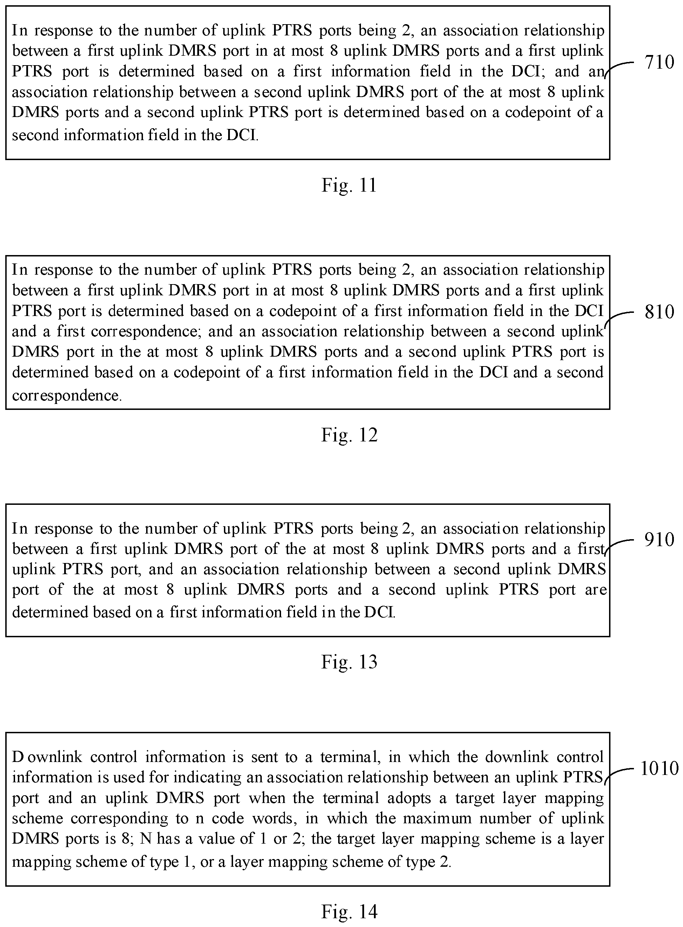

As shown in FIG 11, when the number of uplink PTRS ports is 2, step 210 can be further implemented by step 710 as follows.

In step 710, in response to the number of uplink PTRS ports being 2, an association relationship between a first uplink DMRS port in at most 8 uplink DMRS ports and a first uplink PTRS port is determined based on a first information field in the DCI; and an association relationship between a second uplink DMRS port of the at most 8 uplink DMRS ports and a second uplink PTRS port is determined based on a codepoint of a second information field in the DCI.

The first information field includes M bits, M having a value of 1 or 2. Illustratively, the second information field includes M bits, a codepoint of M bits being used for indicating 2^{M} uplink DMRS ports, M being a positive integer.

The 2 uplink PTRS ports include a first uplink PTRS port and a second uplink PTRS port. When the number of uplink DMRS ports is 4, the first information field and the second information field respectively include 2 bits, and the terminal determines a first uplink DMRS port from the 4 uplink DMRS ports based on the indication of the 2 bits in the first information field and determines a second uplink DMRS port from 4 uplink DMRS ports based on a codepoint of 2 bits and a correspondence in a second information field, in which the second uplink DMRS port refers to other uplink DMRS ports except the first uplink DMRS port in the 4 uplink DMRS ports and the correspondence refers to an association relationship between the second uplink PTRS port corresponding to the codepoint in the second information field and the uplink DMRS port.

When the number of uplink DMRS ports is 8, the first information field and the second information field respectively include at most 3 bits, and the terminal determines a first uplink DMRS port in the 8 uplink DMRS ports based on the indication of the at most 3 bits in the first information field and determines a second uplink DMRS port from 8 uplink DMRS ports based on a codepoint of at most 3 bits and a correspondence in a second information field, in which the second uplink DMRS port refers to other uplink DMRS ports except the first uplink DMRS port in the 8 uplink DMRS ports, and the correspondence refers to an association relationship between the second uplink PTRS port corresponding to the codepoint in the second information field and the uplink DMRS port.

Illustratively, as shown in Table 1, taking the value of M as 2 as an example, a codepoint of 2 bits can represent 4 uplink DMRS ports, and when the value of the codepoint is "00", a second uplink PTRS port is associated with an uplink DMRS port 3 in a correspondence; when the codepoint value is "01", a second uplink PTRS port is associated with an uplink DMRS port 2 in a correspondence; when the codepoint value is "10", a second uplink PTRS port is associated with an uplink DMRS port 1 in a correspondence; when the codepoint value is "11", a second uplink PTRS port is associated with an uplink DMRS port 0 in a correspondence.

**Table 1**

| Codepoint value | Uplink DMRS port associated with the second uplink PTRS port |
|---|---|
| 00 | Uplink DMRS port 3 |
| 01 | Uplink DMRS port 2 |
| 10 | Uplink DMRS port 1 |
| 11 | Uplink DMRS port 0 |

Alternatively, the above first information field is a PTRS-DMRS association field.

Alternatively, the second information field refers to bits of the MCS field other than the first information field or reserved bits of other information fields on the DCI.

Alternatively, the correspondence is defined by a network device; or, the correspondence is predefined.

Alternatively, the above-mentioned M is obtained by a high-level configuration, or the above-mentioned M is obtained by a pre-definition.

As shown in FIG 12, when the number of uplink PTRS ports is 2, step 210 can be further implemented by step 810 as follows.

In step 810, in response to the number of uplink PTRS ports being 2, an association relationship between a first uplink DMRS port in at most 8 uplink DMRS ports and a first uplink PTRS port is determined based on a codepoint of a first information field in the DCI and a first correspondence; and an association relationship between a second uplink DMRS port in the at most 8 uplink DMRS ports and a second uplink PTRS port is determined based on a codepoint of a first information field in the DCI and a second correspondence.

The first information field includes M bits, and the value of M is 2 or 3; a first correspondence is a mapping relationship between a codepoint corresponding to a first uplink PTRS port and an uplink DMRS port; the second correspondence is a mapping relationship between a codepoint corresponding to a second uplink PTRS port and an uplink DMRS port.

Illustratively, an M-bit codepoint is used for indicating 2^{M} association combinations, each association combination corresponding to an uplink DMRS port associated with a first uplink PTRS port and an uplink DMRS port associated with a second uplink PTRS port.

As shown in Table 2, taking the value of M as 3 as an example, and when the value of the codepoint is "000", the uplink DMRS port 0 is associated with the uplink PTRS port 0 (i.e., a first uplink PTRS port) in a first correspondence, and the uplink DMRS port 4 is associated with the uplink PTRS port 1 (i.e., a second uplink PTRS port) in a second correspondence; when the value of the codepoint is "O11", the uplink DMRS port 3 is associated with the uplink PTRS port 0 in the first correspondence, and the uplink DMRS port 5 is associated with the uplink PTRS port 1 in the second correspondence; when the value of the codepoint is "110", the uplink DMRS port 6 is associated with the uplink PTRS port 0 in the first correspondence, and the uplink DMRS port 3 is associated with the uplink PTRS port 1 in the second correspondence.

**Table 2**

| Codepoint value | Uplink DMRS port associated with uplink PTRS port 0 | Uplink DMRS port associated with uplink PTRS port 1 |
|---|---|---|
| 000 | Uplink DMRS port 0 | Uplink DMRS port 4 |
| 001 | Uplink DMRS port 1 | Uplink DMRS port 0 |
| 010 | Uplink DMRS port 2 | Uplink DMRS port 7 |
| 011 | Uplink DMRS port 3 | Uplink DMRS port 5 |
| 100 | Uplink DMRS port 4 | Uplink DMRS port 1 |
| 101 | Uplink DMRS port 5 | Uplink DMRS port 2 |
| 110 | Uplink DMRS port 6 | Uplink DMRS port 3 |
| 111 | Uplink DMRS port 7 | Uplink DMRS port 6 |

Illustratively, at most 8 uplink DMRS ports are divided into 2 DMRS port groups: a first port group and a second DMRS port group, and a first uplink PTRS port corresponding to the first DMRS port group and a second uplink PTRS port corresponding to the second DMRS port group are allocated. Each association combination corresponds to one uplink DMRS port in a first DMRS port group associated with a first uplink PTRS port and one uplink DMRS port in a second DMRS port group associated with a second uplink PTRS port.

As shown in Table 3, taking the value of M as 3, and 8 uplink DMRS ports being divided into 2 DMRS port groups as an example, when the value of the codepoint is "001", the uplink DMRS port 2 is associated with the uplink PTRS port 0 in a first correspondence, and the uplink DMRS port 3 is associated with the uplink PTRS port 1 in a second correspondence; when the value of the codepoint is "100", the uplink DMRS port 0 is associated with the uplink PTRS port 0 in the first correspondence, and the uplink DMRS port 3 is associated with the uplink PTRS port 1 in the second correspondence; when the value of the codepoint is "111", the uplink DMRS port 6 is associated with the uplink PTRS port 0 in the first correspondence, and the uplink DMRS port 1 is associated with the uplink PTRS port 1 in the second correspondence.

**Table 3**

| Codepoint value | Uplink DMRS port associated with uplink PTRS port 0 | Uplink DMRS port associated with uplink PTRS port 1 |
|---|---|---|
| 000 | Uplink DMRS port 0 | Uplink DMRS port 1 |
| 001 | Uplink DMRS port 2 | Uplink DMRS port 3 |
| 010 | Uplink DMRS port 4 | Uplink DMRS port 5 |
| 011 | Uplink DMRS port 6 | Uplink DMRS port 7 |
| 100 | Uplink DMRS port 0 | Uplink DMRS port 3 |
| 101 | Uplink DMRS port 2 | Uplink DMRS port 7 |
| 110 | Uplink DMRS port 4 | Uplink DMRS port 5 |
| 111 | Uplink DMRS port 6 | Uplink DMRS port 1 |

Alternatively, the first correspondence and the second correspondence are defined by a network device; or, the first correspondence and the second correspondence are predefined.

Alternatively, the above-mentioned M is obtained by a high-level configuration, or the above-mentioned M is obtained by a pre-definition.

Alternatively, the first information field is a PTRS-DMRS association field.

In summary, according to the method for determining the relationship between a PTRS port and a DMRS port provided in the present embodiment, a terminal determines a first uplink DMRS port associated with a first uplink PTRS port and a second uplink DMRS port associated with a second uplink PTRS port from at most 8 uplink DMRS ports allocated for use by the terminal based on one or two information fields in downlink control information when using a target layer mapping scheme corresponding to 1 code word, so as to support 2 uplink DMRS ports corresponding to the 2 uplink PTRS ports on a one-to-one basis when at most 8 uplink DMRS ports are used in the layer mapping scheme corresponding to the 1 code word.

Under different layer mapping schemes, when the number of CWs is 1 or 2, an information field in the downlink control information can be defined to indicate an uplink DMRS port in the at most 8 uplink DMRS ports associated with an uplink PTRS port.

As shown in FIG 13, when the number of uplink PTRS ports is 2, step 210 can be implemented by step 910 as follows.

In step 910, in response to the number of uplink PTRS ports being 2, an association relationship between a first uplink DMRS port of the at most 8 uplink DMRS ports and a first uplink PTRS port, and an association relationship between a second uplink DMRS port of the at most 8 uplink DMRS ports and a second uplink PTRS port are determined based on a first information field in the DCI.

When the number of uplink DMRS ports is 2^{M}, the first information field includes 2M or 2 (M-1) bits, and M has a value of 2 or 3. Alternatively, the M Most Significant Bytes (MSB) are used for indicating a first uplink DMRS port of the 2^{M} uplink DMRS ports, and the M Least Significant Bytes (LSB) are used for indicating a second uplink DMRS port of the 2^{M} uplink DMRS ports; or, the M most significant bytes are used for indicating a second uplink DMRS port of the 2^{M} uplink DMRS ports and the M least significant bytes are used for indicating a first uplink DMRS port of the 2^{M} uplink DMRS ports.

Illustratively, the value of 3 bits of a highly significant byte is used for indicating one uplink DMRS port (i.e., a first uplink DMRS port) in the 8 uplink DMRS ports associated with a first uplink PTRS port; the value of 2 bits of the lowly significant bytes is used for indicating another uplink DMRS port (i.e., a second uplink DMRS port) in the 8 uplink DMRS ports associated with the second uplink PTRS port.

Illustratively, 8 uplink DMRS ports are divided into 2 DMRS port groups: a first DMRS port group and a second DMRS port group. Each DMRS port group may include 4 uplink DMRS ports. The values of 2 bits of highly significant bytes are used for indicating an uplink DMRS port (i.e., a first uplink DMRS port) associated with a first uplink PTRS port in a first DMRS port group; the value of 2 bits of the lowly significant bytes is used for indicating one uplink DMRS port (i.e., a second uplink DMRS port) associated with the second uplink PTRS port in the second DMRS port group. The second DMRS port group is a DMRS port group of the two DMRS port groups except the first DMRS port group.

As shown in Table 4, when the number of uplink DMRS ports is 4 and the first information field includes 4 bits, the terminal, in response to the 4 bits being "0001", determines that the first uplink DMRS port associated with the first uplink PTRS port 0 is the uplink DMRS port 0, and the second uplink DMRS port associated with the second uplink PTRS port 1 is the uplink DMRS port 1; in response to the 4 bits being "0110", the terminal determines that the first uplink DMRS port associated with the first uplink PTRS port 0 is an uplink DMRS port 1, and the second uplink DMRS port associated with the second uplink PTRS port 1 is an uplink DMRS port 2; the terminal, in response to the 4 bits being "1011", determines that a first uplink DMRS port associated with a first uplink PTRS port 0 is an uplink DMRS port 2, and a second uplink DMRS port associated with a second uplink PTRS port 1 is an uplink DMRS port 3; in response to the 4 bits being "1100", the terminal determines that the first uplink DMRS port associated with the first uplink PTRS port 0 is the uplink DMRS port 3 and the second uplink DMRS port associated with the second uplink PTRS port 1 is the uplink DMRS port 0.

**Table 4**

| 2 bits of MSB | Uplink DMRS port associated with uplink PTRS port 0 | 2 bits of LSB | Uplink DMRS port associated with uplink PTRS port 1 |
|---|---|---|---|
| 00 | Uplink DMRS port 0 | 01 | Uplink DMRS port 1 |
| 01 | Uplink DMRS port 1 | 10 | Uplink DMRS port 2 |
| 10 | Uplink DMRS port 2 | 11 | Uplink DMRS port 3 |
| 11 | Uplink DMRS port 3 | 00 | Uplink DMRS port 0 |

Alternatively, the first information field is a PTRS-DMRS association field.

In summary, according to the method for determining the relationship between a PTRS port and a DMRS port provided in the present embodiment, a terminal determines a first uplink DMRS port associated with a first uplink PTRS port and a second uplink DMRS port associated with a second uplink PTRS port from at most 8 uplink DMRS ports allocated for use by the terminal based on an information field in downlink control information when using a target layer mapping scheme corresponding to one or two code words. According to the method, 2 uplink DMRS ports corresponding to two uplink PTRS ports on a one-to-one basis when using at most 8 uplink DMRS ports with a layer mapping scheme corresponding to 1 code word, and 2 uplink DMRS ports corresponding to two uplink PTRS ports on a one-to-one basis when using at most 8 uplink DMRS ports with a layer mapping scheme corresponding to 2 code words can be simultaneously supported.

FIG 14 is a flow chart showing a method for determining a relationship between a PTRS port and a DMRS port, which is applied to a network device of the communication system shown in FIG 1, according to an exemplary embodiment of the present disclosure. he method includes the following steps.

In step 1010, downlink control information is sent to a terminal, in which the downlink control information is used for indicating an association relationship between an uplink PTRS port and an uplink DMRS port when the terminal adopts a target layer mapping scheme corresponding to n code words, in which the maximum number of uplink DMRS ports is 8; N has a value of 1 or 2; the target layer mapping scheme is a layer mapping scheme of type 1, or a layer mapping scheme of type 2.

Each type of layer mapping scheme includes two cases when the number of code words is 1 and 2.

Firstly, for a layer mapping scheme of type 1, when the number of code words is 1, the number of transmission layers corresponding to 1 code word after performing the layer mapping is greater than 0 and less than or equal to 4; when the number of code words is 2, 2 code words include a first code word and a second code word, the first code word corresponds to the number of first transmission layers after performing the layer mapping, and the second code word corresponds to the number of second transmission layers after performing the layer mapping, then the difference between the number of first transmission layers and the number of second transmission layers is 0 or 1, and the sum of the number of first transmission layers and the number of second transmission layers is greater than 4 and less than or equal to 8.

Second, for a layer mapping scheme of type 2, when the number of code words is 1, the number of transmission layers corresponding to 1 code word after performing the layer mapping is greater than 0 and less than or equal to 4; when the number of code words is 2, the 2 code words include a first code word and a second code word, the first code word corresponds to the number of first transmission layers after performing the layer mapping, and the second code word corresponds to the number of second transmission layers after performing the layer mapping, then the difference between the number of first transmission layers and the number of second transmission layers is any value from 0 to 6, and the sum of the number of first transmission layers and the number of second transmission layers is greater than 4 and less than or equal to 8.

In addition, for a layer mapping scheme of type 2, when the number of code words is 1, the number of transmission layers corresponding to 1 code word after performing the layer mapping is greater than 0 and less than or equal to 3; when the number of code words is 2, the 2 code words include a first code word and a second code word, the first code word corresponds to the number of first transmission layers after performing the layer mapping, and the second code word corresponds to the number of second transmission layers after performing the layer mapping, then the difference between the number of first transmission layers and the number of second transmission layers is any value from 0 to 6, and the sum of the number of first transmission layers and the number of second transmission layers is greater than 3 and less than or equal to 8.

In addition, for a layer mapping scheme of type 2, when the number of code words is 1, the number of transmission layers corresponding to one CW after performing the layer mapping is 1; when the number of code words is 2, the 2 code words include a first code word and a second code word, the first code word corresponds to the number of first transmission layers after performing the layer mapping, and the second code word corresponds to the number of second transmission layers after performing the layer mapping, then the difference between the number of first transmission layers and the number of second transmission layers is any value from 0 to 6, and the sum of the number of first transmission layers and the number of second transmission layers is greater than 1 and less than or equal to 8.

With the above-mentioned different layer mapping schemes, the number of code words is 2, and the manner for a network device to indicate an uplink PTRS port association relationship may include any one of the following.

The number of uplink PTRS ports is 1, the first information field in the DCI includes M bits, and the M bits are used for indicating an association relationship between an uplink DMRS port in a DMRS port group corresponding to a CW and an uplink PTRS port.

Alternatively, M bits are used for indicating one uplink DMRS port in a DMRS port group corresponding to a CW with a higher MCS, that is to say, a first information field is used for indicating one uplink DMRS port in a DMRS port group corresponding to a CW with a higher MCS.

In addition, M bits are used for indicating one uplink DMRS port in the DMRS port group with the maximum number of allocated ports when the MCS of 2 CWs is the same; that is, the first information field is used for indicating one uplink DMRS port in the DMRS port group having the maximum number of allocated ports if the MCS of 2 CWs is the same.

In addition, M bits are used for indicating one uplink DMRS port in the DMRS port group with the minimum number of allocated ports when the MCS of 2 CWs is the same; that is, the first information field is used for indicating one uplink DMRS port in the DMRS port group having the minimum number of allocated ports if the MCS of 2 CWs is the same.

In addition, M bits are used for indicating one uplink DMRS port in a first DMRS port group corresponding to a first CW; that is, the first information field is used for indicating one uplink DMRS port in the first DMRS port group to which the first CW corresponds.

In addition, M bits are used for indicating one uplink DMRS port in a second DMRS port group corresponding to a second CW; that is, the first information field is used for indicating one uplink DMRS port in the second DMRS port group to which the second CW corresponds.

In addition, M bits are used for indicating one uplink DMRS port in a DMRS port group corresponding to the first CW of the 2 CWs when the MCS of the 2 CWs is the same; that is, the first information field is used for indicating one uplink DMRS port in the DMRS port group corresponding to the first CW of the 2 CWs if the MCS of the 2 CWs is the same.

The first information field includes at most 3 bits.

Alternatively, when the number of uplink DMRS ports is 4, the value of M is 2; when the number of uplink DMRS ports is 8, M has a maximum value of 3, such as 2 or 3.

Alternatively, in case of the layer mapping scheme of type 1, the first information field includes 2 bits; and in case of the layer mapping scheme of type 2, the first information field includes at most 3 bits. For example, when a layer mapping scheme of type 1 corresponding to 2 CWs is used and the number of uplink PTRS ports is 1, an association relationship between an uplink DMRS port in a DMRS port group corresponding to one CW and an uplink PTRS port is indicated based on 2 bits of a first information field; for another example, when using a layer mapping scheme of type 2 corresponding to 2 CWs and the number of uplink PTRS ports being 2, an association relationship between an uplink DMRS port in a DMRS port group corresponding to one CW and an uplink PTRS port is indicated based on 2 or 3 bits of the first information field.

The number of the uplink PTRS ports is 2, and a first information field in the DCI is used for indicating an association relationship between a first uplink DMRS port in a DMRS port group corresponding to one of the CWs and a first uplink PTRS port; in which the first information field includes M bits.

Alternatively, M bits are used for indicating a first uplink DMRS port in a DMRS port group corresponding to a CW with a higher MCS; that is, the first information field is used for indicating the first uplink DMRS port in the DMRS port group corresponding to CW with higher MCS.

In addition, M bits are used for indicating the first uplink DMRS port in the DMRS port group with the maximum number of allocated ports when the MCS of 2 CWs is the same; that is, the first information field is used for indicating the first uplink DMRS port in the DMRS port group having the maximum number of allocated ports if the MCS of 2 CWs is the same.

In addition, M bits are used for indicating the first uplink DMRS port in the DMRS port group with the minimum number of allocated ports when the MCS of 2 CWs is the same; that is, the first information field is used for indicating the first uplink DMRS port in the DMRS port group having the minimum number of allocated ports if the MCS of 2 CWs is the same.

In addition, M bits are used for indicating the first uplink DMRS port in a first DMRS port group corresponding to a first CW; that is, the first information field is used for indicating the first uplink DMRS port in the first DMRS port group to which the first CW corresponds.

In addition, M bits are used for indicating the first uplink DMRS port in a second DMRS port group corresponding to a second CW; that is, the first information field is used for indicating the first uplink DMRS port in the second DMRS port group to which the second CW corresponds.

In addition, M bits are used for indicating the first uplink DMRS port in the DMRS port group corresponding to the first CW of the 2 CWs when the MCS of the 2 CWs is the same; that is, the first information field is used for indicating the first uplink DMRS port in the DMRS port group corresponding to the first CW of the 2 CWs if the MCS of the 2 CWs is the same.

The first information field includes at most 3 bits.

Alternatively, when the number of uplink DMRS ports is 4, the value of M is 2; when the number of uplink DMRS ports is 8, M has a maximum value of 3, such as 2 or 3.

Alternatively, in case of the layer mapping scheme of type 1, the first information field includes 2 bits; and in case of the layer mapping scheme of type 2, the first information field includes at most 3 bits. For example, when a layer mapping scheme of type 1 corresponding to 2 CWs is used and the number of uplink PTRS ports is 2, an association relationship between a first uplink DMRS port in a DMRS port group corresponding to one CW and a first uplink PTRS port is indicated based on 2 bits of a first information field; for another example, when using a layer mapping scheme of type 2 corresponding to 2 CWs and the number of uplink PTRS ports being 2, an association relationship between a first uplink DMRS port in a DMRS port group corresponding to one CW and a first uplink PTRS port is indicated based on 2 or 3 bits of a first information field.

Alternatively, the network device pre-configures a default rule for the terminal, and the default rule includes any one of the following.

The second uplink DMRS port is an uplink DMRS port corresponding to the maximum port number in the remaining DMRS port groups.

In addition, the second uplink DMRS port is an uplink DMRS port corresponding to the minimum port number in the remaining DMRS port groups.

In addition, the second uplink DMRS port is one uplink DMRS port in the remaining DMRS port groups determined based on a predefined manner.

In addition, the second uplink DMRS port is an uplink DMRS port indicated by a network device.

Alternatively, the predefined manner includes: when the first uplink DMRS port is a G^{th} uplink DMRS port in one of the DMRS port groups, the second uplink DMRS port is an H^{th} uplink DMRS port in the remaining DMRS port groups, H is a remainder of a sum of G and 2 divided by P, P is the minimum number of ports corresponding to the 2 DMRS port groups, a value of G is a positive integer less than 8, and values of H and P are both positive integers not greater than 4.

With the above-mentioned different layer mapping schemes, the number of code words is 1, and the manner for a network device to indicate an uplink PTRS port association relationship may include any one of the following.

When the number of CWs is 1, the number of uplink PTRS ports is 1, and the first information field in the DCI includes M bits for indicating an association relationship between one of the 2^{M} uplink DMRS ports and the uplink PTRS port.

When the number of CWs is 1, the number of uplink PTRS ports is 2, and a first information field in the DCI is used for indicating an association relationship between a first uplink DMRS port in the 2^{M} uplink DMRS ports and the first uplink PTRS port; a second information field in the DCI is used for indicating an association relationship between a second uplink DMRS port in the 2^{M} uplink DMRS ports and a second uplink PTRS port; in which the first information field includes M bits.

Alternatively, the second information field refers to bits of the MCS field other than the first information field or reserved bits of other information fields on the DCI.

When the number of CWs is 1, the number of uplink PTRS ports is 2, and a first information field in the DCI is used for indicating an association relationship between a first uplink DMRS port in the 2^{M} uplink DMRS ports and the first uplink PTRS port; a codepoint of a second information field in the DCI is used for indicating an association relationship between a second uplink DMRS port in the 2^{M} uplink DMRS ports and a second uplink PTRS port; in which the first information field includes M bits.

Alternatively, the second information field refers to bits of the MCS field other than the first information field or reserved bits of other information fields on the DCI.

When the number of CWs is 1, the number of uplink PTRS ports is 2, and a codepoint of a first information field in the DCI is used for indicating an association relationship between a first uplink DMRS port in 2^{M} uplink DMRS ports and a first uplink PTRS port in a first correspondence; a codepoint of a first information field in the DCI is used for indicating an association relationship between a second uplink DMRS port in 2^{M} uplink DMRS ports and a second uplink PTRS port in a second correspondence; in which the first information field includes M bits; the first correspondence is a mapping relationship between a codepoint corresponding to a first uplink PTRS port and an uplink DMRS port; the second correspondence is a mapping relationship between a codepoint corresponding to a second uplink PTRS port and an uplink DMRS port.

With the above-mentioned different layer mapping schemes, the number of code words is 1 or 2, and the manner for a network device to indicate an uplink PTRS port association relationship may include the following.

The number of uplink PTRS ports is 2, and a first information field in the DCI includes 2M bits, in which the 2M bits are used for indicating an association relationship between a first uplink DMRS port in the 2^{M} uplink DMRS ports and a first uplink PTRS port and an association relationship between a second uplink DMRS port and a second uplink PTRS port.

Alternatively, the 2M bits include M most significant bytes and M least significant bytes; the M most significant bytes are used for indicating a first uplink DMRS port, and the M least significant bytes are used for indicating a second uplink DMRS port; or, the M most significant bytes are used for indicating the second uplink DMRS port and the M least significant bytes are used for indicating the first uplink DMRS port.

Alternatively, the value of M is 2 or 3.

Alternatively, the above first information field is a PTRS-DMRS association field.

In summary, according to the method for determining the relationship between a PTRS port and a DMRS port provided by the present embodiment, the network device transmits downlink control information to a terminal, so that when a terminal uses a target layer mapping scheme corresponding to n code words, an uplink DMRS port associated with an uplink PTRS port is determined from at most 8 uplink DMRS ports based on downlink control information, and the method is used for supporting the implementation of relevant functions of the uplink PTRS port and the uplink DMRS port corresponding to the use of at most 8 antenna ports with different layer mapping schemes, for example, for supporting the terminal to use the uplink PTRS port and the uplink DMRS port corresponding to the use of 8 antenna ports to perform a co-phase error estimation with different layer mapping schemes.

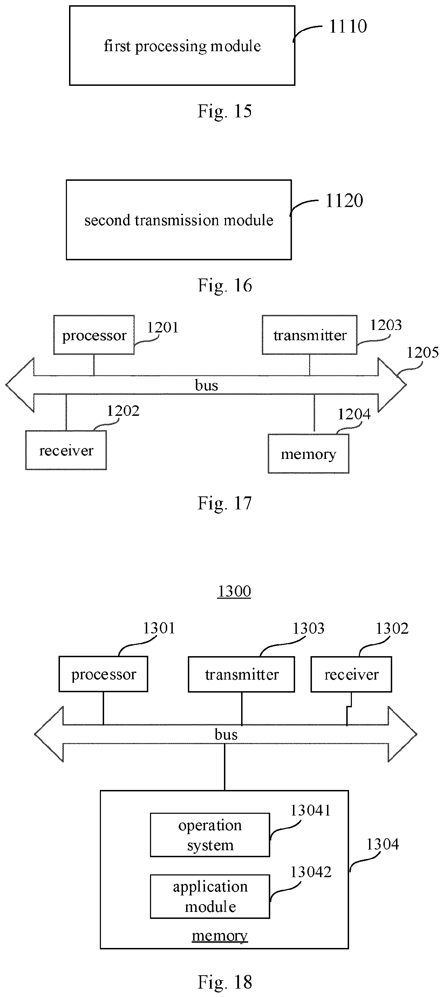

FIG 15 illustrates a block diagram showing an apparatus for determining a relationship between a PTRS port and a DMRS port, which may be implemented as part or the whole UE through software, hardware, or a combination thereof, according to an exemplary embodiment of the present disclosure, the apparatus including a first processing module 1110.

The first processing module 1110 is configured to determine an association relationship between an uplink PTRS port and an uplink DMRS port based on DCI in case of adopting a target layer mapping scheme corresponding to n CWs.

A maximum number of uplink DMRS ports is 8, a value of n is 1 or 2, and the target layer mapping scheme is a layer mapping scheme of type 1 or a layer mapping scheme of type 2.

In some embodiments, the 2 code words include a first code word and a second code word; the first code word corresponds to the number of first transmission layers after performing layer mapping, and the second code word corresponds to the number of second transmission layers after performing layer mapping;
In case of the layer mapping scheme of type 1, the layer number difference between the number of the first transmission layers and the number of the second transmission layers is 0 or 1.

In case of the layer mapping scheme of type 2, the layer number difference between the number of the first transmission layers and the number of the second transmission layers is any value from 0 to 6.

In some embodiments, in case of the layer mapping scheme of type 1, the sum of the number of the first transmission layers and the number of the second transmission layers is greater than 4 and less than or equal to 8.

In case of the layer mapping scheme of type 2, the sum of the number of the first transmission layers and the number of the second transmission layers is greater than 4 and less than or equal to 8; or, the sum of the number of the first transmission layers and the number of the second transmission layers is greater than 3 and less than or equal to 8; or, the sum of the first number of transmission layers and the second number of transmission layers is greater than 1 and less than or equal to 8.

In some embodiments, when the number of CWs is 2, the 8 uplink DMRS ports are divided into 2 DMRS port groups, and the 2 CWs correspond to the 2 DMRS port groups on a one-to-one basis.

The first processing module 1110 is configured to, in response to the number of the uplink PTRS ports being 1, determine an association relationship between an uplink DMRS port in a DMRS port group corresponding to one of the CWs and the uplink PTRS port based on a first information field in the DCI; in which the first information field includes at most 3 bits.

In some embodiments, the first information field is used for indicating one uplink DMRS port in a DMRS port group corresponding to the CW with a higher MCS;
or, the first information field is used for indicating one uplink DMRS port in a DMRS port group with the maximum number of allocated ports when the MCS of the 2 CWs is the same;
or, the first information field is used for indicating one uplink DMRS port in a DMRS port group with the minimum number of allocated ports when the MCS of the 2 CWs is the same;
or, the first information field is used for indicating one uplink DMRS port in a DMRS port group corresponding to a first one of the 2 CWs when the MCS of the 2 CWs is the same;
or, the first information field is used for indicating one uplink DMRS port in a first DMRS port group corresponding to a first CW;
or, the first information field is used for indicating one uplink DMRS port in a second DMRS port group corresponding to a second CW.

In some embodiments, in case of the layer mapping scheme of type 1, the first information field includes 2 bits.

In case of the layer mapping scheme of type 2, the first information field includes at most 3 bits.

In some embodiments, when the number of CWs is 2, the 8 uplink DMRS ports are divided into 2 DMRS port groups, and the 2 CWs correspond to the 2 DMRS port groups on a one-to-one basis.

The first processing module 1110 is configured to, in response to the number of the uplink PTRS ports being 2, determine an association relationship between the first uplink DMRS port in a DMRS port group corresponding to one of the CWs and the first uplink PTRS port based on a first information field in the DCI; in which the first information field includes at most 3 bits.

In some embodiments, the first information field is used for indicating the first uplink DMRS port in the DMRS port group corresponding to the CW with a higher MCS;
or, the first information field is used for indicating the first uplink DMRS port in the DMRS port group with the maximum number of allocated ports when the MCS of the 2 CWs is the same;
or, the first information field is used for indicating the first uplink DMRS port in the DMRS port group with the minimum number of allocated ports when the MCS of the 2 CWs is the same;
or, the first information field is used for indicating the first uplink DMRS port in the DMRS port group corresponding to a first one of the 2 CWs when the MCS of the 2 CWs is the same;
or, the first information field is used for indicating the first uplink DMRS port in a first DMRS port group corresponding to a first CW;
or, the first information field is used for indicating the first uplink DMRS port in a second DMRS port group corresponding to a second CW.

In some embodiments, in case of the layer mapping scheme of type 1, the first information field includes 2 bits.

In case of the layer mapping scheme of type 2, the first information field includes at most 3 bits.

In some embodiments, the first processing module 1110 is configured to determine an association relationship between a second uplink DMRS port in the remaining DMRS port groups and a second uplink PTRS port based on a default rule.

In some embodiments, the default rules include any one of:
the second uplink DMRS port being an uplink DMRS port corresponding to the maximum port number in the remaining DMRS port groups;
or, the second uplink DMRS port being an uplink DMRS port corresponding to the minimum port number in the remaining DMRS port groups;
or, the second uplink DMRS port being one uplink DMRS port in the remaining DMRS port groups determined based on a predefined manner;
or, the second uplink DMRS port being an uplink DMRS port indicated by a network device.

In some embodiments, the predefined manner includes the following.

When the first uplink DMRS port is a G^{th} uplink DMRS port in one of the DMRS port groups, the second uplink DMRS port is an H^{th} uplink DMRS port in the remaining DMRS port groups, H is a remainder of a sum of G and 2 divided by P, P is the minimum number of ports corresponding to the 2 DMRS port groups, a value of G is a positive integer less than 8, and values of H and P are both positive integers not greater than 4.

In some embodiments, in case of the layer mapping scheme of type 1, the number of transmission layers corresponding to 1 code word after performing a layer mapping is greater than 0 and less than or equal to 4.

In case of the layer mapping scheme of type 2, the number of transmission layers corresponding to 1 code word after performing a layer mapping is greater than 0 and less than or equal to 4; or, the number of transmission layers corresponding to the 1 CW after performing the layer mapping is greater than 0 and less than or equal to 3; or, the number of transmission layers corresponding to the 1 CW after performing the layer mapping is 1.

In some embodiments, the first processing module 1110 is configured to, in response to the number of uplink PTRS ports being 1, determine an association relationship between an uplink DMRS port of the 8 uplink DMRS ports and the uplink PTRS port based on a first information field in the DCI when the number of CWs is 1; the first information field includes 3 bits.

In some embodiments, the first processing module 1110 is configured to, in response to the number of the uplink PTRS ports being 2, determine an association relationship between a first uplink DMRS port in the 8 uplink DMRS ports and a first uplink PTRS port based on a first information field in the DCI when the number of the CWs is 1, the first information field including 3 bits; and determine an association relationship between a second uplink DMRS port in the 8 uplink DMRS ports and a second uplink PTRS port based on a second information field in the DCI.

In some embodiments, the first processing module 1110 is configured to, in response to the number of the uplink PTRS ports being 2, determine an association relationship between a first uplink DMRS port in the 8 uplink DMRS ports and a first uplink PTRS port based on a first information field in the DCI when the number of the CWs is 1, the first information field including 3 bits; and determine an association relationship between a second uplink DMRS port in the 8 uplink DMRS ports and a second uplink PTRS port based on a codepoint of a second information field in the DCI.

In some embodiments, the second information field refers to bits of a MCS field or reserved bits of other information fields on the DCI than the first information field.

In some embodiments, the first processing module 1110 is configured to, in response to the number of uplink PTRS ports being 2, determine an association relationship between a first uplink DMRS port in the 8 uplink DMRS ports and a first uplink PTRS port based on a codepoint of a first information field in the DCI and a first correspondence when the number of CWs is 1; and determine an association relationship between a second uplink DMRS port in the 8 uplink DMRS ports and a second uplink PTRS port based on a codepoint of a first information field in the DCI and a second correspondence.

The first information field includes 3 bits; the first correspondence is a mapping relationship between a codepoint corresponding to the first uplink PTRS port and an uplink DMRS port; the second correspondence is a mapping relationship between a codepoint corresponding to the second uplink PTRS port and the uplink DMRS port.

In some embodiments, the first processing module 1110 is configured to, in response to the number of the uplink PTRS ports being 2, determine an association relationship between a first uplink DMRS port in the 8 uplink DMRS ports and a first uplink PTRS port and an association relationship between a second uplink DMRS port in the 8 uplink DMRS ports and a second uplink PTRS port based on a first information field in the DCI; in which the first information field includes 6 bits.

In some embodiments, the 6 bits include 3 most significant bytes MSB and 3 least significant bytes LSB.

The 3 most significant bytes are used for indicating the first uplink DMRS port, and the 3 least significant bytes are used for indicating the second uplink DMRS port;
or, the 3 most significant bytes are used for indicating the second uplink DMRS port and the 3 least significant bytes are used for indicating the first uplink DMRS port.

FIG 16 illustrates a block diagram showing an apparatus for determining a relationship between a PTRS port and a DMRS port, which may be implemented as part or the whole network device through software, hardware, or a combination thereof, according to an exemplary embodiment of the present disclosure, the apparatus including a second transmission module 1120.

The second transmission module 1120 is configured to transmit downlink control information to a terminal, in which the downlink control information is used for indicating an association relationship between an uplink PTRS port and an uplink DMRS port of the terminal when using a target layer mapping scheme corresponding to n code words.

A maximum number of uplink DMRS ports is 8, a value of n is 1 or 2, and the target layer mapping scheme is a layer mapping scheme of type 1 or a layer mapping scheme of type 2.

In some embodiments, the 2 code words include a first code word and a second code word; the first code word corresponds to the number of first transmission layers after performing the layer mapping, and the second code word corresponds to the number of second transmission layers after performing the layer mapping.

In case of the layer mapping scheme of type 1, the layer number difference between the number of the first transmission layers and the number of the second transmission layers is 0 or 1.

In case of the layer mapping scheme of type 2, the layer number difference between the number of the first transmission layers and the number of the second transmission layers is any value from 0 to 6.

In some embodiments, in case of the layer mapping scheme of type 1, the sum of the number of the first transmission layers and the number of the second transmission layers is greater than 4 and less than or equal to 8.

In case of the layer mapping scheme of type 2, the sum of the number of the first transmission layers and the number of the second transmission layers is greater than 4 and less than or equal to 8; or, the sum of the number of the first transmission layers and the number of the second transmission layers is greater than 3 and less than or equal to 8; or, the sum of the first number of transmission layers and the second number of transmission layers is greater than 1 and less than or equal to 8.

In some embodiments, when the number of CWs is 2, the 8 uplink DMRS ports are divided into 2 DMRS port groups, and the 2 CWs correspond to the 2 DMRS port groups on a one-to-one basis.

The number of the uplink PTRS ports is 1, a first information field in the DCI includes at most 3 bits, and the first information field is used for indicating an association relationship between an uplink DMRS port in a DMRS port group corresponding to one of the CWs and the uplink PTRS port.

In some embodiments, the first information field is used for indicating one uplink DMRS port in a DMRS port group corresponding to the CW with a higher MCS;
or, the first information field is used for indicating one uplink DMRS port in a DMRS port group with the maximum number of allocated ports when the MCS of the 2 CWs is the same;
or, the first information field is used for indicating one uplink DMRS port in a DMRS port group with the minimum number of allocated ports when the MCS of the 2 CWs is the same;
or, the first information field is used for indicating one uplink DMRS port in a DMRS port group corresponding to a first one of the 2 CWs when the MCS of the 2 CWs is the same;
or, the first information field is used for indicating one uplink DMRS port in a first DMRS port group corresponding to a first CW;
or, the first information field is used for indicating one uplink DMRS port in a second DMRS port group corresponding to a second CW.

In some embodiments, in case of the layer mapping scheme of type 1, the first information field includes 2 bits.

In case of the layer mapping scheme of type 2, the first information field includes at most 3 bits.

In some embodiments, when the number of CWs is 2, the 8 uplink DMRS ports are divided into 2 DMRS port groups, and the 2 CWs correspond to the 2 DMRS port groups on a one-to-one basis.

The number of the uplink PTRS ports is 2, and a first information field in the DCI is used for indicating an association relationship between a first uplink DMRS port in a DMRS port group corresponding to one of the CWs and a first uplink PTRS port; in which the first information field includes at most 3 bits.

In some embodiments, the first information field is used for indicating the first uplink DMRS port in the DMRS port group corresponding to the CW with a higher MCS;
or, the first information field is used for indicating the first uplink DMRS port in the DMRS port group with the maximum number of allocated ports when the MCS of the 2 CWs is the same;
or, the first information field is used for indicating the first uplink DMRS port in the DMRS port group with the minimum number of allocated ports when the MCS of the 2 CWs is the same;
or, the first information field is used for indicating the first uplink DMRS port in the DMRS port group corresponding to a first one of the 2 CWs when the MCS of the 2 CWs is the same;
or, the first information field is used for indicating the first uplink DMRS port in a first DMRS port group corresponding to a first CW;
or, the first information field is used for indicating the first uplink DMRS port in a second DMRS port group corresponding to a second CW.

In some embodiments, in case of the layer mapping scheme of type 1, the first information field includes 2 bits.

In case of the layer mapping scheme of type 2, the first information field includes at most 3 bits.

In some embodiments, in case of the layer mapping scheme of type 1, the number of transmission layers corresponding to 1 code word after performing a layer mapping is greater than 0 and less than or equal to 4.

In case of the layer mapping scheme of type 2, the number of transmission layers corresponding to 1 code word after performing a layer mapping is greater than 0 and less than or equal to 4; or, the number of transmission layers corresponding to the 1 CW after performing the layer mapping is greater than 0 and less than or equal to 3; or, the number of transmission layers corresponding to the 1 CW after performing the layer mapping is 1.

In some embodiments, when the number of CWs is 1, the number of uplink PTRS ports is 1, and the first information field in the DCI includes 3 bits for indicating an association relationship between one of the 8 uplink DMRS ports and the uplink PTRS port.

In some embodiments, when the number of CWs is 1, the number of uplink PTRS ports is 2, a first information field in the DCI is used for indicating an association relationship between a first uplink DMRS port in the 8 uplink DMRS ports and a first uplink PTRS port, and the first information field includes 3 bits; a second information field in the DCI is used for indicating an association relationship between a second uplink DMRS port in the 8 uplink DMRS ports and a second uplink PTRS port.

In some embodiments, when the number of CWs is 1, the number of uplink PTRS ports is 2, a first information field in the DCI is used for indicating an association relationship between a first uplink DMRS port in the 8 uplink DMRS ports and a first uplink PTRS port, and the first information field includes 3 bits; a codepoint of a second information field in the DCI is used for indicating an association relationship between a second uplink DMRS port in the 8 uplink DMRS ports and a second uplink PTRS port.

In some embodiments, the second information field refers to bits of a MCS field or reserved bits of other information fields on the DCI than the first information field.

In some embodiments, when the number of CWs is 1, the number of uplink PTRS ports is 2, and a codepoint of a first information field in the DCI is used for indicating an association relationship between a first uplink DMRS port in the 8 uplink DMRS ports and a first uplink PTRS port in a first correspondence; a codepoint of a first information field in the DCI is used for indicating an association relationship between a second uplink DMRS port in the 8 uplink DMRS ports and a second uplink PTRS port in a second correspondence.

The first information field includes 3 bits; the first correspondence is a mapping relationship between a codepoint corresponding to the first uplink PTRS port and an uplink DMRS port; the second correspondence is a mapping relationship between a codepoint corresponding to the second uplink PTRS port and the uplink DMRS port.

In some embodiments, the number of uplink PTRS ports is 2, and the first information field in the DCI includes 6 bits for indicating an association relationship between a first uplink DMRS port in the 8 uplink DMRS ports and a first uplink PTRS port and an association relationship between a second uplink DMRS port in the 8 uplink DMRS ports and a second uplink PTRS port.

In some embodiments, the 6 bits include 3 most significant bytes and 3 least significant bytes.

The 3 most significant bytes are used for indicating the first uplink DMRS port, and the 3 least significant bytes are used for indicating the second uplink DMRS port;
or, the 3 most significant bytes are used for indicating the second uplink DMRS port and the 3 least significant bytes are used for indicating the first uplink DMRS port.

FIG 17 shows a schematic structural diagram showing a UE provided by an exemplary embodiment of the present disclosure, the UE including: a processor 1201, a receiver 1202, a transmitter 1203, a memory 1204, and a bus 1205.

The processor 1201 includes one or more processing cores and executes software programs and modules to perform various functional applications and information processing.

The receiver 1202 and the transmitter 1203 may be implemented as a communication assembly, which may be a communication chip.

The memory 1204 is coupled to the processor 1201via the bus 1205.

The memory 1204 may be used to store at least one instruction, and the processor 1201 may be used to execute the at least one instruction to implement various steps in the method embodiments described above.

Further, the memory 1204 may be implemented by any type or combination of volatile or non-volatile memory devices including, but not limited to: magnetic or optical disk, Electrically Erasable Programmable Read Only Memory (EEPROM), Erasable Programmable Read Only Memory (EPROM), Static Random-Access Memory (SRAM), Read Only Memory (ROM), magnetic memory, flash memory, and Programmable Read Only Memory (PROM).

In an exemplary embodiment, a non-transitory computer-readable storage medium including instructions is further provided, such as a memory including instructions, executable by a processor of a UE to perform the above method for determining a relationship between a PTRS port and a DMRS port. For example, the non-transitory computer-readable storage medium may be an ROM, a Random-Access Memory (RAM), a Compact Disc Read Only Memory (CD-ROM), a magnetic tape, a floppy disk, an optical data storage device, etc.

A non-transitory computer-readable storage medium that, when executed by a processor of a UE, enables the UE to perform the above method for determining a relationship between a PTRS port and a DMRS port.

FIG 18 is a block diagram showing a network device 1300 according to an exemplary embodiment. The network device 1300 may be a base station.

The network device 1300 may include: a processor 1301, a receiver 1302, a transmitter 1303, and a memory 1304. The receiver 1302, the transmitter 1303, and the memory 1304 are each coupled to the processor 1301 via a bus.

The processor 1301 includes one or more processing cores and executes software programs and modules to perform the method of determining a relationship between a PTRS port and a DMRS port provided by the embodiment of the present disclosure. The memory 1304 may be used for storing software programs and modules. Specifically, the memory 1304 may store an operation system 13041, an application module 13042 required for at least one function. The receiver 1302 is used for receiving communication data transmitted by other devices, and the transmitter 1303 is used for transmitting communication data to other devices.

An exemplary embodiment of the present disclosure also provides a computer-readable storage medium having stored therein at least one instruction, at least one program, a set of codes, or a set of instructions that are loaded and executed by the processor to implement the method for determining a relationship between a PTRS port and a DMRS port as provided by various method embodiments above.

An exemplary embodiment of the present disclosure also provides a computer program product including computer instructions stored in a computer-readable storage medium; a processor of a computer device reads the computer instructions from the computer-readable storage medium, and executes the computer instructions to cause the computer device to perform the method for determining a relationship between a PTRS port and a DMRS port as provided by various method embodiments described above.

It should be understood that "a plurality of......" mentioned herein means two or more. "And/or......", describing an associated relationship of an associated object, indicates that three relationships may exist, for example, A and/or B, may indicate that: there are three cases of A alone, A and B together, and B alone. The character "/" generally indicates that the associated object is an "or" relationship.

Other embodiments of the present disclosure will be apparent to a person skilled in the art from consideration of the description and practice of the present invention disclosed herein. The present disclosure is intended to cover any variations, uses, or adaptations of the present disclosure following, in general, the principles of the present disclosure and including such departures from the present disclosure as come within known or customary practice in the art to which the present disclosure pertains. It is intended that the description and examples be considered as exemplary only, with a true scope and spirit of the present disclosure being indicated by the following claims.

It should be understood that the present disclosure is not limited to the precise arrangements described above and shown in the accompanying drawings, and that various modifications and changes may be made without departing from the scope thereof. The scope of the present disclosure is limited only by the following claims.

## Claims

1. A method for determining a relationship between a Phase Tracking Reference Signal (PTRS) port and a Demodulation Reference Signal (DMRS), performed by a terminal, the method comprising:
in case a target layer mapping scheme corresponding to n code words CWs is used, determining an association relationship between an uplink PTRS port and an uplink DMRS port based on downlink control information DCI,
wherein a maximum number of uplink DMRS ports is 8, a value of n is 1 or 2, and the target layer mapping scheme is a layer mapping scheme of type 1 or a layer mapping scheme of type 2.

2. The method according to claim 1, wherein the 2 code words comprise a first code word and a second code word; the first code word corresponds to a number of first transmission layers after performing a layer mapping, and the second code word corresponds to a number of second transmission layers after performing the layer mapping;
in case of the layer mapping scheme of type 1, a layer number difference between the number of the first transmission layers and the number of the second transmission layers is 0 or 1; and
in case of the layer mapping scheme of type 2, a layer number difference between the number of the first transmission layers and the number of the second transmission layers is any value from 0 to 6.

3. The method according to claim 2, wherein
in case of the layer mapping scheme of type 1, a sum of the number of the first transmission layers and the number of the second transmission layers is greater than 4 and less than or equal to 8; and
in case of the layer mapping scheme of type 2, a sum of the number of the first transmission layers and the number of the second transmission layers is greater than 4 and less than or equal to 8; or, a sum of the number of the first transmission layers and the number of the second transmission layers is greater than 3 and less than or equal to 8; or, a sum of the first number of transmission layers and the second number of transmission layers is greater than 1 and less than or equal to 8.

4. The method according to claim 3, wherein in case a number of CWs is 2, the 8 uplink DMRS ports are divided into 2 DMRS port groups, and the 2 CWs correspond to the 2 DMRS port groups on a one-to-one basis;
determining an association relationship between an uplink PTRS port and an uplink DMRS port based on DCI comprises:
in response to a number of the uplink PTRS ports being 1, determining an association relationship between an uplink DMRS port in a DMRS port group corresponding to one of the CWs and the uplink PTRS port based on a first information field in the DCI; wherein the first information field comprises at most 3 bits.

5. The method according to claim 4, wherein
the first information field is used for indicating one uplink DMRS port in a DMRS port group corresponding to the CW with a higher modulation and coding strategy MCS;
or,
the first information field is used for indicating one uplink DMRS port in a DMRS port group with a maximum number of allocated ports in case the MCS of the 2 CWs is the same;
or,
the first information field is used for indicating one uplink DMRS port in a DMRS port group with a minimum number of allocated ports in case the MCS of the 2 CWs is the same;
or,
the first information field is used for indicating one uplink DMRS port in a DMRS port group corresponding to a first one of the 2 CWs in case the MCS of the 2 CWs is the same;
or,
the first information field is used for indicating one uplink DMRS port in a first DMRS port group corresponding to a first CW;
or,
the first information field is used for indicating one uplink DMRS port in a second DMRS port group corresponding to a second CW.

6. The method according to claim 5, wherein
in case of the layer mapping scheme of type 1, the first information field comprises 2 bits; or
in case of the layer mapping scheme of type 2, the first information field comprises at most 3 bits.

7. The method according to claim 3, wherein in case a number of CWs is 2, the 8 uplink DMRS ports are divided into 2 DMRS port groups, and the 2 CWs correspond to the 2 DMRS port groups on a one-to-one basis;
determining an association relationship between an uplink PTRS port and an uplink DMRS port based on DCI comprises:
in response to a number of the uplink PTRS ports being 2, determining an association relationship between a first uplink DMRS port in a DMRS port group corresponding to one of the CWs and a first uplink PTRS port based on a first information field in the DCI; wherein the first information field comprises at most 3 bits.

8. The method according to claim 7, wherein
the first information field is used for indicating the first uplink DMRS port in the DMRS port group corresponding to the CW with a higher MCS;
or,
the first information field is used for indicating the first uplink DMRS port in the DMRS port group with a maximum number of allocated ports in case the MCS of the 2 CWs is the same;
or,
the first information field is used for indicating the first uplink DMRS port in the DMRS port group with a minimum number of allocated ports in case the MCS of the 2 CWs is the same;
or,
the first information field is used for indicating the first uplink DMRS port in the DMRS port group corresponding to a first one of the 2 CWs in case the MCS of the 2 CWs is the same;
or,
the first information field is used for indicating the first uplink DMRS port in a first DMRS port group corresponding to a first CW;
or,
the first information field is used for indicating the first uplink DMRS port in a second DMRS port group corresponding to a second CW.

9. The method according to claim 8, wherein
in case of the layer mapping scheme of type 1, the first information field comprises 2 bits; and
in case of the layer mapping scheme of type 2, the first information field comprises at most 3 bits.

10. The method according to any one of claims 7 to 9, further comprising:
determining an association relationship between a second uplink DMRS port in remaining DMRS port groups and a second uplink PTRS port based on a default rule.

11. The method according to claim 10, wherein the default rule comprises any one of:
the second uplink DMRS port being an uplink DMRS port corresponding to a maximum port number in the remaining DMRS port groups;
or,
the second uplink DMRS port being an uplink DMRS port corresponding to a minimum port number in the remaining DMRS port groups;
or,
the second uplink DMRS port being one uplink DMRS port in the remaining DMRS port groups determined based on a predefined manner;
or,
the second uplink DMRS port being an uplink DMRS port indicated by a network device.

12. The method according to claim 11, wherein the predefined manner comprises:
in case the first uplink DMRS port is a G^{th} uplink DMRS port in one of the DMRS port groups, the second uplink DMRS port is an H^{th} uplink DMRS port in the remaining DMRS port groups, H is a remainder of a sum of G and 2 divided by P, P is the minimum number of ports corresponding to the 2 DMRS port groups, a value of G is a positive integer less than 8, and values of H and P are both positive integers not greater than 4.

13. The method according to claim 1, wherein
in case of the layer mapping scheme of type 1, a number of transmission layers corresponding to the 1 CW after performing a layer mapping is greater than 0 and less than or equal to 4; and
in case of the layer mapping scheme of type 2, a number of transmission layers corresponding to the 1 CW after performing the layer mapping is greater than 0 and less than or equal to 4; or, a number of transmission layers corresponding to the 1 CW after performing the layer mapping is greater than 0 and less than or equal to 3; or, a number of transmission layers corresponding to the 1 CW after performing the layer mapping is 1.

14. The method according to claim 13, wherein in case a number of CWs is 1, determining an association relationship between an uplink PTRS port and an uplink DMRS port based on DCI comprises:
in response to a number of the uplink PTRS ports being 1, determining an association relationship between one uplink DMRS port of the 8 uplink DMRS ports and the uplink PTRS port based on a first information field in the DCI; wherein the first information field comprises 3 bits.

15. The method according to claim 13, wherein in case a number of CWs is 1, determining an association relationship between an uplink PTRS port and an uplink DMRS port based on DCI comprises:
in response to a number of the uplink PTRS ports being 2, determining an association relationship between a first uplink DMRS port in the 8 uplink DMRS ports and a first uplink PTRS port based on a first information field in the DCI, wherein the first information field comprises 3 bits; and
determining an association relationship between a second uplink DMRS port in the 8 uplink DMRS ports and a second uplink PTRS port based on a second information field in the DCI.

16. The method according to claim 13, wherein in case a number of CWs is 1, determining an association relationship between an uplink PTRS port and an uplink DMRS port based on DCI comprises:
in response to a number of the uplink PTRS ports being 2, determining an association relationship between a first uplink DMRS port in the 8 uplink DMRS ports and a first uplink PTRS port based on a first information field in the DCI, wherein the first information field comprises 3 bits; and
determining an association relationship between a second uplink DMRS port in the 8 uplink DMRS ports and a second uplink PTRS port based on a codepoint of a second information field in the DCI.

17. The method according to claim 15 or 16, wherein the second information field refers to bits of a MCS field or reserved bits of other information fields on the DCI than the first information field.

18. The method according to claim 13, wherein in case a number of CWs is 1, determining an association relationship between an uplink PTRS port and an uplink DMRS port based on DCI comprises:
in response to a number of the uplink PTRS ports being 2, determining an association relationship between a first uplink DMRS port in the 8 uplink DMRS ports and a first uplink PTRS port based on a codepoint of a first information field in the DCI and a first correspondence; and
determining an association relationship between a second uplink DMRS port in the 8 uplink DMRS ports and a second uplink PTRS port based on a codepoint of a first information field in the DCI and a second correspondence; wherein
the first information field comprises 3 bits; the first correspondence is a mapping relationship between a codepoint corresponding to the first uplink PTRS port and an uplink DMRS port; the second correspondence is a mapping relationship between a codepoint corresponding to the second uplink PTRS port and the uplink DMRS port.

19. The method according to claim 3 or 13, wherein determining an association relationship between an uplink PTRS port and an uplink DMRS port based on DCI comprises:
in response to a number of the uplink PTRS ports being 2, determining an association relationship between a first uplink DMRS port in the 8 uplink DMRS ports and a first uplink PTRS port and an association relationship between a second uplink DMRS port and a second uplink PTRS port based on a first information field in the DCI; wherein the first information field comprises 6 bits.

20. The method according to claim 19, wherein the 6 bits comprise 3 most significant bytes (MSB) and 3 least significant bytes (LSB);
the 3 most significant bytes are used for indicating the first uplink DMRS port, and the 3 least significant bytes are used for indicating the second uplink DMRS port;
or,
the 3 most significant bytes are used for indicating the second uplink DMRS port and the 3 least significant bytes are used for indicating the first uplink DMRS port.

21. A method for determining a relationship between a PTRS port and a DMRS port, performed by a network device, the method comprising:
transmitting downlink control information to a terminal, wherein the downlink control information is used for indicating an association relationship between an uplink PTRS port and an uplink DMRS port in case of the terminal using a target layer mapping scheme corresponding to n code words;
wherein a maximum number of uplink DMRS ports is 8, a value of n is 1 or 2, and the target layer mapping scheme is a layer mapping scheme of type 1 or a layer mapping scheme of type 2.

22. The method according to claim 21, wherein the 2 code words comprise a first code word and a second code word; the first code word corresponds to a number of first transmission layers after performing a layer mapping, and the second code word corresponds to a number of second transmission layers after performing the layer mapping;
in case of the layer mapping scheme of type 1, a layer number difference between the number of the first transmission layers and the number of the second transmission layers is 0 or 1; and
in case of the layer mapping scheme of type 2, a layer number difference between the number of the first transmission layers and the number of the second transmission layers is any value from 0 to 6.

23. The method according to claim 22, wherein
in case of the layer mapping scheme of type 1, a sum of the number of the first transmission layers and the number of the second transmission layers is greater than 4 and less than or equal to 8; and
in case of the layer mapping scheme of type 2, a sum of the number of the first transmission layers and the number of the second transmission layers is greater than 4 and less than or equal to 8; or, a sum of the number of the first transmission layers and the number of the second transmission layers is greater than 3 and less than or equal to 8; or, a sum of the first number of transmission layers and the second number of transmission layers is greater than 1 and less than or equal to 8.

24. The method according to claim 23, wherein in case a number of CWs is 2, the 8 uplink DMRS ports are divided into 2 DMRS port groups, and the 2 CWs correspond to the 2 DMRS port groups on a one-to-one basis;
a number of the uplink PTRS ports is 1, a first information field in the DCI comprises at most 3 bits, and the first information field is used for indicating an association relationship between an uplink DMRS port in a DMRS port group corresponding to one of the CWs and the uplink PTRS port.

25. The method according to claim 24, wherein
the first information field is used for indicating one uplink DMRS port in a DMRS port group corresponding to the CW with a higher MCS;
or,
the first information field is used for indicating one uplink DMRS port in a DMRS port group with a maximum number of allocated ports in case the MCS of the 2 CWs is the same;
or,
the first information field is used for indicating one uplink DMRS port in a DMRS port group with a minimum number of allocated ports in case the MCS of the 2 CWs is the same;
or,
the first information field is used for indicating one uplink DMRS port in a DMRS port group corresponding to a first one of the 2 CWs in case the MCS of the 2 CWs is the same;
or,
the first information field is used for indicating one uplink DMRS port in a first DMRS port group corresponding to a first CW;
or,
the first information field is used for indicating one uplink DMRS port in a second DMRS port group corresponding to a second CW.

26. The method according to claim 25, wherein
in case of the layer mapping scheme of type 1, the first information field comprises 2 bits; or
in case of the layer mapping scheme of type 2, the first information field comprises at most 3 bits.

27. The method according to claim 23, wherein in case a number of CWs is 2, the 8 uplink DMRS ports are divided into 2 DMRS port groups, and the 2 CWs correspond to the 2 DMRS port groups on a one-to-one basis;
a number of the uplink PTRS ports is 2, and a first information field in the DCI is used for indicating an association relationship between a first uplink DMRS port in a DMRS port group corresponding to one of the CWs and a first uplink PTRS port; wherein the first information field comprises at most 3 bits.

28. The method according to claim 27, wherein
the first information field is used for indicating the first uplink DMRS port in the DMRS port group corresponding to the CW with a higher MCS;
or,
the first information field is used for indicating the first uplink DMRS port in the DMRS port group with a maximum number of allocated ports in case the MCS of the 2 CWs is the same;
or,
the first information field is used for indicating the first uplink DMRS port in the DMRS port group with a minimum number of allocated ports in case the MCS of the 2 CWs is the same;
or,
the first information field is used for indicating the first uplink DMRS port in the DMRS port group corresponding to a first one of the 2 CWs in case the MCS of the 2 CWs is the same;
or,
the first information field is used for indicating the first uplink DMRS port in a first DMRS port group corresponding to a first CW;
or,
the first information field is used for indicating the first uplink DMRS port in a second DMRS port group corresponding to a second CW.

29. The method according to claim 28, wherein
in case of the layer mapping scheme of type 1, the first information field comprises 2 bits; and
in case of the layer mapping scheme of type 2, the first information field comprises at most 3 bits.

30. The method according to claim 21, wherein
in case of the layer mapping scheme of type 1, a number of transmission layers corresponding to the 1 CW after performing a layer mapping is greater than 0 and less than or equal to 4; and
in case of the layer mapping scheme of type 2, a number of transmission layers corresponding to the 1 CW after performing the layer mapping is greater than 0 and less than or equal to 4; or, a number of transmission layers corresponding to the 1 CW after performing the layer mapping is greater than 0 and less than or equal to 3; or, a number of transmission layers corresponding to the 1 CW after performing the layer mapping is 1.

31. The method according to claim 30, wherein in case a number of CWs is 1, a number of uplink PTRS ports is 1, and a first information field in the DCI comprises 3 bits for indicating an association relationship between one uplink DMRS port of the 8 uplink DMRS ports and the uplink PTRS port.

32. The method according to claim 30, wherein in case a number of CWs is 1, a number of uplink PTRS ports is 2, a first information field in the DCI is used for indicating an association relationship between a first uplink DMRS port in the 8 uplink DMRS ports and a first uplink PTRS port, and the first information field comprises 3 bits; and a second information field in the DCI is used for indicating an association relationship between a second uplink DMRS port in the 8 uplink DMRS ports and a second uplink PTRS port.

33. The method according to claim 30, wherein in case a number of CWs is 1, a number of uplink PTRS ports is 2, a first information field in the DCI is used for indicating an association relationship between a first uplink DMRS port in the 8 uplink DMRS ports and a first uplink PTRS port, and the first information field comprises 3 bits; a codepoint of a second information field in the DCI is used for indicating an association relationship between a second uplink DMRS port in the 8 uplink DMRS ports and a second uplink PTRS port.

34. The method according to claim 32 or 33, wherein the second information field refers to bits of a MCS field or reserved bits of other information fields on the DCI than the first information field.

35. The method according to claim 30, wherein in case a number of CWs is 1, a number of uplink PTRS ports is 2, and a codepoint of a first information field in the DCI is used for indicating an association relationship between a first uplink DMRS port in the 8 uplink DMRS ports and a first uplink PTRS port in a first correspondence; a codepoint of a first information field in the DCI is used for indicating an association relationship between a second uplink DMRS port in the 8 uplink DMRS ports and a second uplink PTRS port in a second correspondence;
the first information field comprises 3 bits; the first correspondence is a mapping relationship between a codepoint corresponding to the first uplink PTRS port and an uplink DMRS port; the second correspondence is a mapping relationship between a codepoint corresponding to the second uplink PTRS port and the uplink DMRS port.

36. The method according to claim 23 or 30, wherein a number of uplink PTRS ports is 2, and a first information field in the DCI comprises 6 bits for indicating an association relationship between a first uplink DMRS port in the 8 uplink DMRS ports and a first uplink PTRS port and an association relationship between a second uplink DMRS port and a second uplink PTRS port.

37. The method according to claim 36, wherein the 6 bits comprise 3 most significant bytes and 3 least significant bytes;
the 3 most significant bytes are used for indicating the first uplink DMRS port, and the 3 least significant bytes are used for indicating the second uplink DMRS port;
or,
the 3 most significant bytes are used for indicating the second uplink DMRS port and the 3 least significant bytes are used for indicating the first uplink DMRS port.

38. An apparatus for determining a relationship between a PTRS port and a DMRS port, the apparatus comprising:
a first processing module configured to determine an association relationship between an uplink PTRS port and an uplink DMRS port based on DCI in case of adopting a target layer mapping scheme corresponding to n CWs;
wherein a maximum number of uplink DMRS ports is 8, a value of n is 1 or 2, and the target layer mapping scheme is a layer mapping scheme of type 1 or a layer mapping scheme of type 2.

39. An apparatus for determining a relationship between a PTRS port and a DMRS port, the apparatus comprising:
a second transmission module configured to transmit downlink control information to a terminal, wherein the downlink control information is used for indicating an association relationship between an uplink PTRS port and an uplink DMRS port in case of the terminal using a target layer mapping scheme corresponding to n code words;
wherein a maximum number of uplink DMRS ports is 8, a value of n is 1 or 2, and the target layer mapping scheme is a layer mapping scheme of type 1 or a layer mapping scheme of type 2.

40. A terminal, comprising:
a processor; and
a transceiver coupled to the processor; wherein
the processor is configured to load and execute executable instructions to implement a method for determining a relationship between a PTRS port and a DMRS port according to any one of claims 1 to 20.

41. A network device, comprising:
a processor; and
a transceiver coupled to the processor; wherein
the processor is configured to load and execute executable instructions to implement a method for determining a relationship between a PTRS port and a DMRS port according to any one of claims 21 to 37.

42. A computer-readable storage medium, wherein the computer-readable storage medium has stored therein at least one instruction, at least one piece of a program, a set of codes or a set of instructions loaded and executed by a processor to implement the method for determining a relationship between a PTRS port and a DMRS port according to any one of claims 1 to 20 or the method for determining a relationship between a PTRS port and a DMRS port according to any one of claims 21 to 37.

43. A computer program product, comprising computer instructions stored on a computer-readable storage medium; a processor of a computer device reading the computer instructions from the computer readable storage medium, the processor executing the computer instructions to cause the computer device to perform the method for determining a relationship between a PTRS port and a DMRS port according to any one of claims 1 to 20 or the method for determining a relationship between a PTRS port and a DMRS port according to any one of claims 21 to 37.
